(19) Europäisches Patentamt European Patent Office Office européen des brevets

(11) **EP 4 503 393 A1**

(12) **EUROPEAN PATENT APPLICATION**
published in accordance with Art. 153(4) EPC

(43) Date of publication:
**05.02.2025 Bulletin 2025/06**

(21) Application number: **23780386.1**

(22) Date of filing: **27.03.2023**

(51) International Patent Classification (IPC):
**H02K 3/04** (2006.01)     **H02K 1/14** (2006.01)
**H02K 3/50** (2006.01)

(52) Cooperative Patent Classification (CPC):
**H02K 1/14; H02K 3/04; H02K 3/50**

(86) International application number:
**PCT/JP2023/012274**

(87) International publication number:
**WO 2023/190377 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022057308**

(71) Applicant: **DAIKIN INDUSTRIES, LTD.**
**Osaka-shi, Osaka 530-0001 (JP)**

(72) Inventors:
• **KIDO, Naohiro**
  **Osaka-Shi, Osaka 530-0001 (JP)**

• **YANAGIDA, Yasuto**
  **Osaka-Shi, Osaka 530-0001 (JP)**
• **ASARI, Tsukasa**
  **Osaka-Shi, Osaka 530-0001 (JP)**
• **ASANO, Yoshinari**
  **Osaka-Shi, Osaka 530-0001 (JP)**
• **HIBINO, Hiroshi**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **ROTARY ELECTRICAL MACHINE, BLOWER, COMPRESSOR, REFRIGERATION DEVICE, AND VEHICLE**

(57)     A technique capable of implementing a more appropriate layout of a lead wire extending from a coil wire of a stator in a claw pole-type rotary electrical device is provided. A claw pole motor 1 according to an embodiment of the present disclosure includes a rotor 10 freely rotatable about a rotation axis AX; a stator 20 including a coil 212 wound around in an annular state and a stator core 210 of a claw pole-type provided so as to surround a periphery of the coil 212; and a lead wire LL extending from the coil 212, wherein the stator core 210 includes a through-hole 210D provided centered around the rotation axis and penetrating in an axial direction and a through-hole 210E, in which the lead wire LL is arranged, penetrating in the axial direction.

EP 4 503 393 A1

# FIG.16

**Description**

TECHNICAL FIELD

The present disclosure relates to a rotary electrical device, etc.

BACKGROUND ART

Conventionally, technology related to the layout of an electric wire (hereinafter, "lead wire") extending from a coil of a claw pole-type rotary electrical device is known (for example, see Patent Document 1).
Patent Document 1 discloses a method of axially drawing out a lead wire from a gap between claw magnetic poles of a core of a stator by passing the lead wire outside the core.

CITATION LIST

PATENT DOCUMENT

Patent document 1: Japanese Unexamined Patent Application Publication No. 2013-158072

SUMMARY OF INVENTION

TECHNICAL PROBLEM

However, in Patent document 1, for example, a method is adopted in which a lead wire is passed from a gap between the claw magnetic poles of the core of the stator to the outside of the core and is drawn out in the axial direction. Therefore, the distance between the lead wire and the rotor becomes relatively short, and as a result, there is a possibility of contact between the lead wire and the rotor.
It is an object of the present disclosure to provide a technique capable of implementing a more appropriate layout of a lead wire extending from a coil wire of a stator in a claw pole-type rotary electrical device.

SOLUTION TO PROBLEM

According to a first aspect of the present disclosure, there is provided
a rotary electrical device including:

  a rotor freely rotatable about a rotation axis;
  a stator including a coil wire wound around in an annular state and a core of a claw pole-type provided so as to surround a periphery of the coil wire; and
  an electric wire extending from the coil wire, wherein
  the core includes a first through-hole provided centered around the rotation axis and penetrating in an axial direction and a second through-hole, in which the electric wire is arranged, penetrating in the axial direction.

According to the present embodiment, the lead wire (electric wire) extending from the coil wire included in the claw pole-type core can be drawn out of the core through the second through-hole. Therefore, for example, a situation in which the lead wire and the rotor come into contact with each other can be prevented. Thus, in the claw pole-type rotary electrical device, the lead wire extending from the coil wire of the stator can be laid out more appropriately.
Further, in a second aspect of the present disclosure, on the premise of the first aspect described above,

  the stator may include a first stator unit including the coil wire and the core, and a second stator unit including the coil wire and the core, and
  the first stator unit and the second stator unit may be stacked in the axial direction.

Further, in a third aspect of the present disclosure, on the premise of the second aspect described above, the second through-hole of the first stator unit and the second through-hole of the second stator unit may be connected as viewed from the axial direction.
Further, in a fourth aspect of the present disclosure, based on the third aspect described above,

  the stator may include three or more stator units stacked in the axial direction, including the first stator unit and the second stator unit, and
the second through-holes of all of the stator units may be connected as viewed from the axial direction.

Further, in a fifth aspect of the present disclosure, based on the third or fourth aspect described above,

a pipe member having a tubular shape may be fit into the second through-holes of the first stator unit and the second stator unit so as to penetrate in the axial direction, wherein
the electric wire may be arranged in the pipe member.

In a sixth aspect of the present disclosure, based on the fifth aspect described above,

a holding portion may be configured to hold the stator at one end portion in the axial direction, wherein
one end portion of the pipe member may be coupled with the holding portion.

In a seventh aspect of the present disclosure, on the premise of any one of the second to sixth aspects, the cores of the first stator unit and the second stator unit may have a same shape as each other.
In an eighth aspect of the present disclosure, on the premise of the seventh aspect,

each core may include a first yoke portion covering an inside or an outside of the coil wire in a radial direction, a second yoke portion covering both end portions of the coil wire in the axial direction, and claw magnetic poles provided at equal intervals in a circumferential direction on an outer peripheral portion or an inner peripheral portion of the second yoke portion,
the claw magnetic poles of the second yoke portion at one end portion in the axial direction and the claw magnetic poles of the second yoke portion at another end portion in the axial direction may be alternately arranged in the circumferential direction, and
the first stator unit and the second stator unit may be arranged such that the claw magnetic poles are at same positions in the circumferential direction.

Further, in a ninth aspect of the present disclosure, on the premise of the seventh aspect described above,

the first stator unit and the second stator unit may be arranged such that positions thereof in the circumferential direction are displaced from each other by a predetermined electric angle $\theta$ [°],
the first stator unit may have a predetermined number, which is two or more, of the second through-holes,
the second stator unit may have the predetermined number of the second through-holes,
the predetermined number of the second through-holes of the first stator unit may be spaced apart in the circumferential direction by an electric angle $(\theta+360\times N)$ [°] (N being an integer greater than or equal to 0), and
the predetermined number of the second through-holes of the second stator unit may be spaced apart in the circumferential direction by an electric angle $(\theta+360\times N)$ [°] (N being an integer greater than or equal to 0).

According to a tenth aspect of the present disclosure, on the premise of the ninth aspect,

the rotary electrical device may be driven by an M-phase (M being an integer greater than or equal to 2) alternating current power, and
the electric angle may be $\theta = 360/M$ [°].

In an eleventh aspect of the present disclosure, on the premise of any one of the first aspect to the tenth aspect,

the core may include a first yoke portion covering an inside or an outside of the coil wire in a radial direction, second yoke portions covering respective end portions of the coil wire in the axial direction, and claw magnetic poles provided at equal intervals in a circumferential direction on an outer peripheral portion of the second yoke portion,
the claw magnetic pole of the second yoke portion at one end portion in the axial direction and the claw magnetic pole of the second yoke portion at another end portion in the axial direction may be alternately arranged in the circumferential direction,
the core includes a first core and a second core may be divided in the axial direction by the first yoke portion,
the first core and the second core may have the second through-hole,
the second through-hole of the first core may be provided at an angular position shifted by 1/4 of an interval between the claw magnetic poles adjacent to each other forming a same pole with reference to an angular position at which one of the claw magnetic poles is arranged, or at two angular positions symmetrical to each other with reference to a first angular position, and

the second through-hole of the second core may be provided at an angular position shifted by 1/4 of the interval between the claw magnetic poles adjacent to each other forming a same pole with reference to the angular position at which one of the claw magnetic poles is arranged, or at two angular positions symmetrical to each other with reference to the first angular position.

In a twelfth aspect of the present disclosure, on the premise of any one of the first aspect to the tenth aspect,

the core may include a first yoke portion covering an inside or an outside of the coil wire in a radial direction, and a second yoke portion covering both end portions of the coil wire in the axial direction, and

the core may be divided into a first core including the second yoke portion, which covers one end portion of the coil wire in the axial direction, and a part of the first yoke portion in the circumferential direction, and a second core including the second yoke portion, which covers another end portion of the coil wire in the axial direction, and a remaining part of the first yoke portion in the circumferential direction.

In a thirteenth aspect of the present disclosure, on the premise of the twelfth aspect,

a gap connected to the second through-hole is provided between surfaces of the first yoke portions, adjacent in the circumferential direction, of the first core and the second core, and

the electric wire may be arranged in the second through-hole through the gap.

In another embodiment of the present disclosure,
a fan including:
the rotary electrical device according to any one of the first aspect to the thirteenth aspect is provided.

In yet another embodiment of the present disclosure,
a compressor including:
the rotary electrical device according to any one of the first to thirteenth embodiments described above is provided.

In yet another embodiment of the present disclosure,
a refrigeration apparatus including:
the rotary electrical device according to any one of the first to thirteenth embodiments described above is provided.

In yet another embodiment of the present disclosure,
a vehicle including:
the rotary electrical device according to any one of the first to thirteenth embodiments described above is provided.

ADVANTAGEOUS EFFECTS OF INVENTION

According to the embodiments described above, it is possible to achieve a more suitable layout of a lead wire extending from the coil wire of a stator in a claw pole-type rotary electrical device.

BRIEF DESCRIPTION OF DRAWINGS

[FIG. 1] FIG. 1 is a perspective view illustrating an example of a claw pole motor (rotor).
[FIG. 2] FIG. 2 is a perspective view illustrating an example of a stator.
[FIG. 3] FIG. 3 is a longitudinal sectional view illustrating an example of a claw pole motor (a sectional view, as viewed from the radial direction, of a sectional plane parallel to the axial direction).
[FIG. 4] FIG. 4 is a longitudinal sectional view illustrating another example of a claw pole motor.
[FIG. 5] FIG. 5 is a longitudinal sectional view illustrating yet another example of a claw pole motor.
[FIG. 6] FIG. 6 is a cross-sectional view illustrating another example of a rotor (a sectional view, as viewed from the axial direction, of a sectional plane perpendicular to the axial direction).
[FIG. 7] FIG. 7 is an exploded view illustrating a first example of a stator unit (stator core).
[FIG. 8] FIG. 8 is an exploded view illustrating a second example of a stator unit (stator core).
[FIG. 9] FIG. 9 is a perspective view illustrating a third example of a stator unit (stator core).
[FIG. 10] FIG. 10 is an exploded view illustrating a third example of a stator unit (stator core).
[FIG. 11] FIG. 11 is a perspective view illustrating another example of a stator.
[FIG. 12] FIG. 12 is a diagram illustrating an example of a circuit configuration of a claw pole motor.
[FIG. 13] FIG. 13 illustrates another example of the circuit configuration of a claw pole motor.

[FIG. 14] FIG. 14 is a vertical sectional view schematically illustrating a first example of the layout of lead wires of a coil in a claw pole motor.
[FIG. 15] FIG. 15 is a top view illustrating an example of a through-hole in a stator core.
[FIG. 16] FIG. 16 is a vertical sectional view illustrating an example of a tubular member arranged in a through-hole in a stator core.
[FIG. 17] FIG. 17 is a vertical sectional view schematically illustrating a second example of the layout of a lead wire of a coil in a claw pole motor.
[FIG. 18] FIG. 18 is a vertical sectional view illustrating an example of a guiding path of a lead wire between a coil and a through-hole in a stator core.
[FIG. 19] FIG. 19 is a perspective view illustrating another example of a guiding path of a lead wire between a coil and a through-hole in a stator core.
[FIG. 20] FIG. 20 is a perspective view illustrating still another example of a guiding path of a lead wire between a coil and a through-hole in a stator core.
[FIG. 21] FIG. 21 is a vertical sectional view schematically illustrating a third example of a layout of a lead wire of a coil in a claw pole motor.
[FIG. 22] FIG. 22 is a diagram illustrating an example of an arrangement of through-holes in a stator core.
[FIG. 23] FIG. 23 illustrates an example of the arrangement of the through-holes in the stator core.
[FIG. 24] FIG. 24 illustrates an example of an air conditioner.
[FIG. 25] FIG. 25 illustrates an example of a vehicle.

DESCRIPTION OF EMBODIMENTS

Hereinafter, an embodiment will be described with reference to the drawings.

[Basic configuration of claw pole motor]

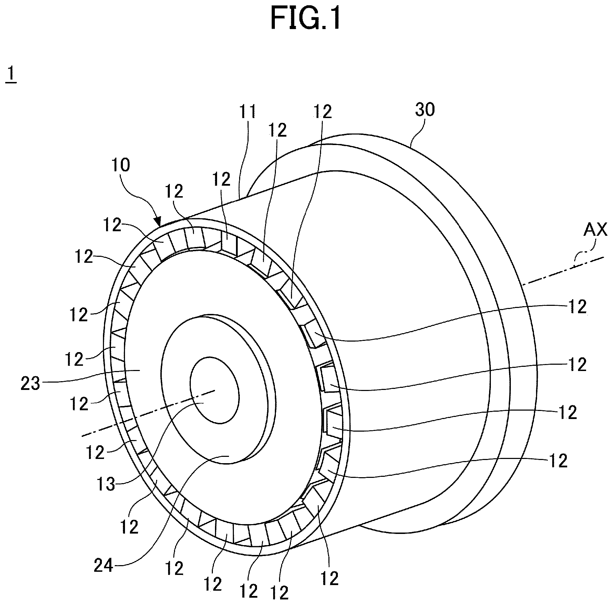

The basic configuration of the claw pole motor 1 according to the present embodiment will be described with reference to FIGS. 1 to 11.

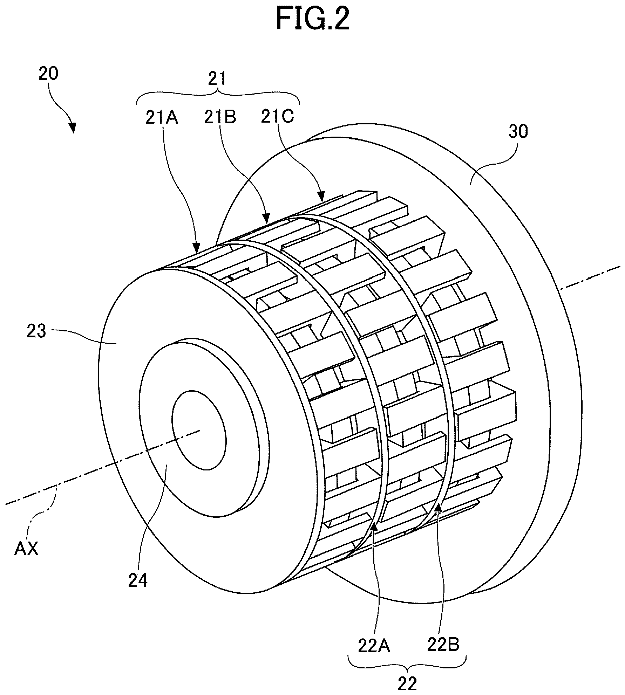

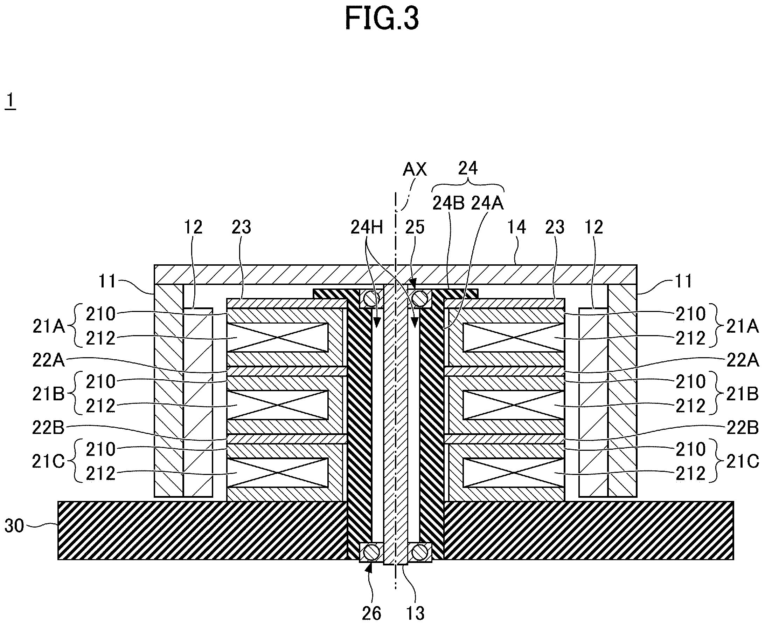

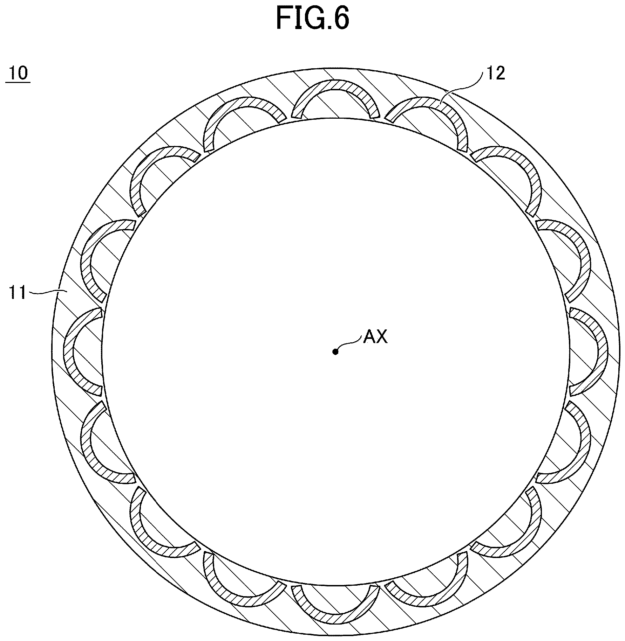

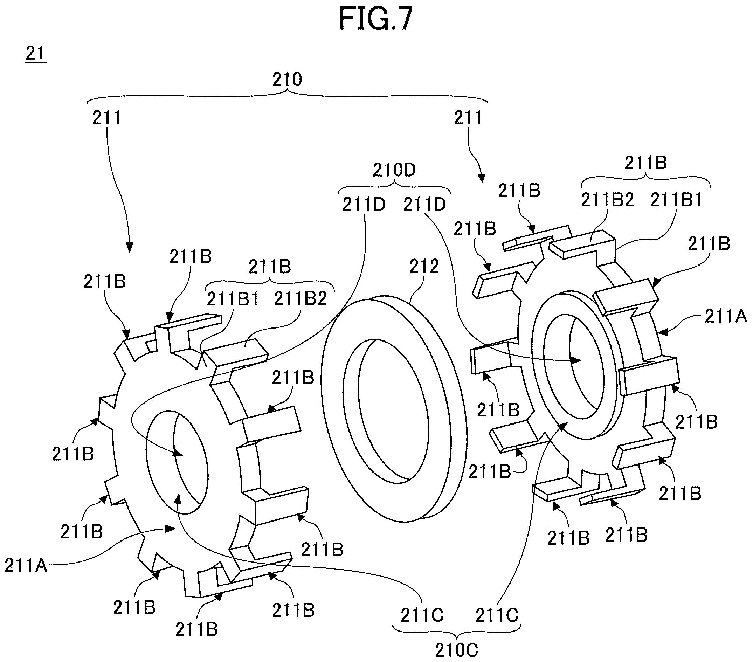

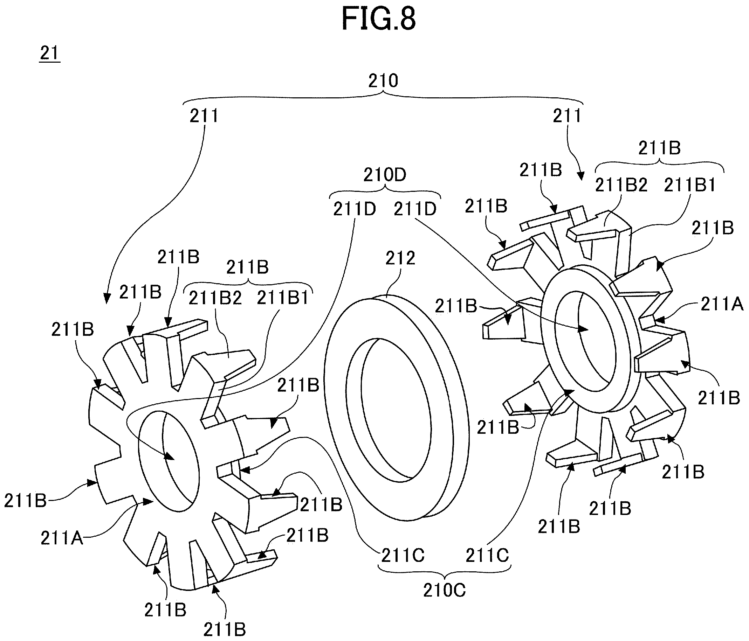

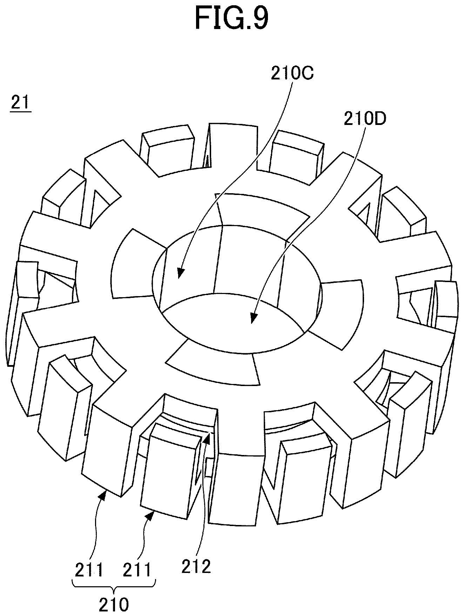

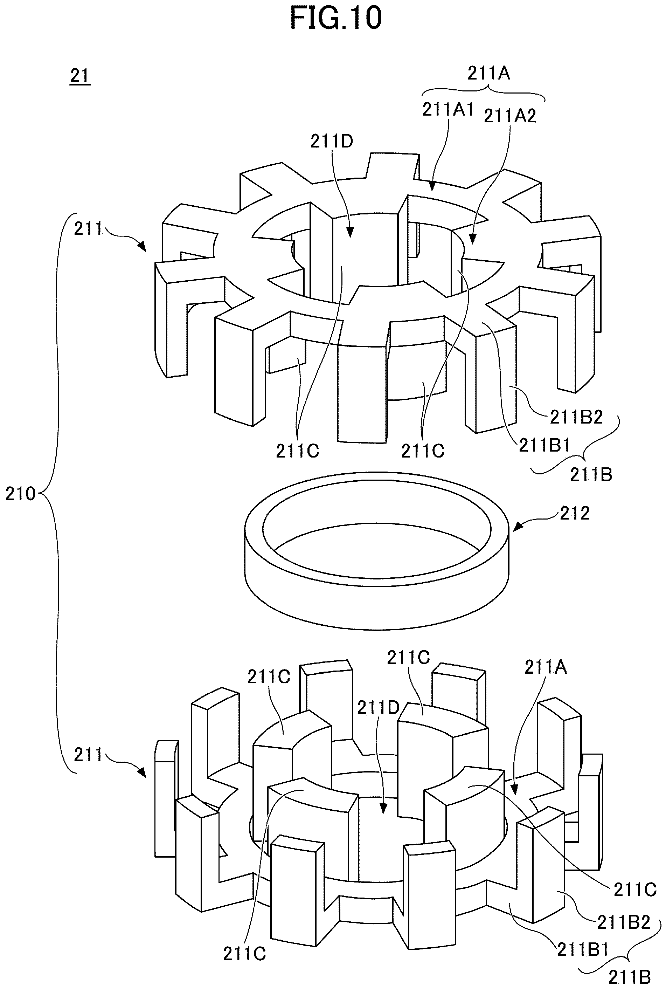

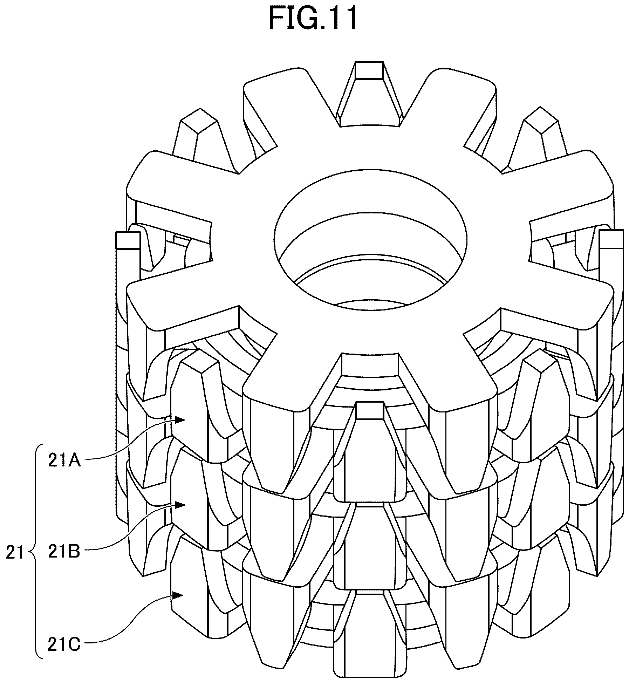

FIG. 1 is a perspective view illustrating an example of a claw pole motor 1 (a rotor 10). FIG. 2 is a perspective view illustrating an example of a stator 20 of the claw pole motor 1. More specifically, FIG. 2 is a view in which the rotor 10 (a rotor core 11, a permanent magnet 12, and a rotation shaft member 13) in FIG. 1 is not illustrated. FIGS. 3 to 5 are longitudinal cross-sectional views in a plane including the rotation axis AX illustrating an example, another example, and still another example of the claw pole motor 1. FIG. 6 is a cross-sectional view in a plane perpendicular to the rotation axis AX illustrating another example of the rotor 10. FIG. 7 is an exploded view illustrating a first example of the stator unit 21 (a stator core 210). FIG. 8 is an exploded view illustrating a second example of the stator unit 21 (the stator core 210). FIG. 9 is a perspective view illustrating a third example of the stator unit 21 (the stator core 210). FIG. 10 is an exploded view illustrating a third example of the stator unit 21 (a stator core 211). FIG. 11 is a perspective view illustrating another example of the stator 20.

In FIG. 1, in order to expose the inner structure of the rotor 10, a coupling member 14, which will be described later, is not illustrated. In FIGS. 3 to 5, the claw pole portion 211B2 is not illustrated for simplicity, and the structures of the stator units 21A to 21C, which will be described later, are simplified.

As illustrated in FIGS. 1 and 2, the claw pole motor (also referred to as a "claw pole-type rotary electrical device") 1 is of an outer rotor type and driven by armature currents of multiple phases (in this example, three phases).

The claw pole motor 1 may be of an inner rotor type. The claw pole motor 1 may be driven by single-phase or two-phase armature currents, or may be driven by armature currents of four or more phases.

As illustrated in FIGS. 1 to 5, the claw pole motor 1 includes the rotor 10, the rotation shaft member 13, a coupling member 14, the stator 20, a support member 24, bearings 25 and 26, and a fixing member 30.

As illustrated in FIGS. 1, 3, and 5, a rotor 10 is arranged outward in a radial direction with the rotation axis AX of the claw pole motor 1 being the reference (center) with respect to the stator 20 (hereinafter, simply "the radial direction"), and is rotatable about the rotation axis AX. The rotor 10 is a permanent magnet field and includes the rotor core 11 and the permanent magnet 12.

In the case of an inner rotor type, the rotor 10 is arranged inward in the radial direction relative to the stator 20. The rotor 10 may have any configuration as long as the claw pole motor 1 can function as a rotary electrical device. For example, the rotor 10 need not have a permanent magnet, such as in the case where the claw pole motor 1 is an induction motor, a reluctance motor, or the like.

The rotor core 11 has, for example, a substantially cylindrical shape, and is arranged so that the rotation axis AX of the claw pole motor 1 and the cylindrical axis substantially coincide. "Substantially" is intended to allow manufacturing errors, for example, and will be used for the same purpose hereinafter. The rotor core 11 has a length substantially equal to that of the stator 20 in the axial direction along the rotation axis AX of the claw pole motor 1 (hereinafter, simply "axial direction"). The rotor core 11 is formed of, for example, a soft magnetic material such as an electromagnetic steel plate, cast iron, or a dust core. The rotor core 11 is formed of, for example, a single member in the axial direction as illustrated in FIG. 1. The rotor core 11 may be formed of, for example, a plurality of rotor cores stacked in the axial direction. For example, the rotor core 11 may be formed of three rotor cores corresponding respectively to the later-described stator units 21A to 21C.

The permanent magnet 12 generates a magnetic field that interlinks with the stator 20 serving as an armature. The permanent magnet 12 is, for example, a neodymium sintered magnet or a ferrite magnet.

For example, as illustrated in FIG. 2, a plurality (in this example, 20) of the permanent magnets 12 are arranged at substantially equal intervals in a circumferential direction with the rotation axis AX as a reference (center) (hereinafter simply referred to as "circumferential direction") on the inner circumferential surface of the rotor core 11. That is, the claw pole motor 1 may be a surface permanent magnet (SPM).

As illustrated in FIG. 6, a plurality (in this example, 16) of the permanent magnets 12 may be arranged at substantially equal intervals in the circumferential direction, for example, in such a manner as to be embedded in the rotor core 11. That is, the rotor 10 may be an interior permanent magnet (IPM).

The permanent magnets 12 are magnetized with different magnetic poles on respective end surfaces in the radial direction. The two permanent magnets 12 adjacent to each other in the circumferential direction are magnetized with different magnetic poles facing inward in the radial direction toward the stator 20. Therefore, at the same axial position, outside the stator 20 in the radial direction, the permanent magnets 12 having the N-pole magnetized inward in the radial direction and the permanent magnets 12 having the S-pole magnetized inside the radial direction are arranged in an alternating manner in the circumferential direction.

The plurality of permanent magnets 12 arranged in the circumferential direction may be replaced with ring magnets or plastic magnets having different magnetic poles arranged alternately inward in the radial direction, in the circumferential direction in the same manner as the plurality of permanent magnets 12. In this case, annular (substantially cylindrical) permanent magnets (ring magnets) magnetized with polar anisotropic magnetization orientation so that different magnetic poles appear alternately on the inner peripheral surface in the circumferential direction may be adopted.

As illustrated in FIGS. 3 to 5, the plurality of circumferentially arranged permanent magnets 12 are arranged in a range from one axial end to the other axial end of the rotor 10 so as to be radially opposed to all the axially stacked stator units 21 (the stator units 21A to 21C) described below. Thus, the permanent magnets 12 can apply a magnetic field to all the stator units 21.

For example, as illustrated in FIGS. 3 to 5, the plurality of circumferentially arranged permanent magnets 12 are arranged at substantially the same circumferential position in the axial range corresponding to all the stator units 21. In this case, as illustrated in FIGS. 3 to 5, the plurality of circumferentially arranged permanent magnets 12 may be composed of a single magnet member in a range from one axial end to the other axial end of the rotor 10, or may be divided into a plurality of magnet members in the axial direction. For example, the permanent magnets 12 at a certain circumferential position are composed of three magnet members corresponding to the number of members of the rotor core 11 to be stacked. In the latter case, the plurality of magnet members constituting the axially divided permanent magnets 12 are all magnetized with the same magnetic pole inward in the radial direction facing the stator 20. As described above, the position of the magnetic pole in the circumferential direction may also be the same when a ring magnet or a plastic magnet composed of a single member in the circumferential direction is adopted.

Further, the plurality of permanent magnets 12 arranged in the circumferential direction may be arranged so that their positions in the circumferential direction are different each time the radially opposed stator units 21 are switched in the axial direction. Specifically, the permanent magnets 12 opposed to each of the two axially adjacent stator units 21 are arranged so as to be displaced in the circumferential direction by an angle $\theta$e [°] defined by the following equation (1). As described above, the same may be applied to the positions of the magnetic poles in the circumferential direction when a ring magnet or a plastic magnet composed of a single member in the circumferential direction is adopted.

$$\theta e = 360/M \quad ...(1)$$

Note that M is the phase number of AC power (armature current) for driving the claw pole motor 1.

For example, as illustrated in FIG. 2, when the claw pole motor 1 is driven by a three-phase alternating current (M = 3), the angle $\theta$e as the electric angle is 120°.

Note that, when a plastic magnet composed of a single member is adopted in the circumferential direction, the rotor core 11 may be omitted. Further, when a single member is composed in the circumferential direction and a permanent magnet (ring magnet) with an annular shape (substantially cylindrical shape) and magnetized with a polar anisotropic magnetization orientation so that different magnetic poles appear alternately in the circumferential direction on the inner peripheral surface is adopted, the rotor core 11 may be omitted.

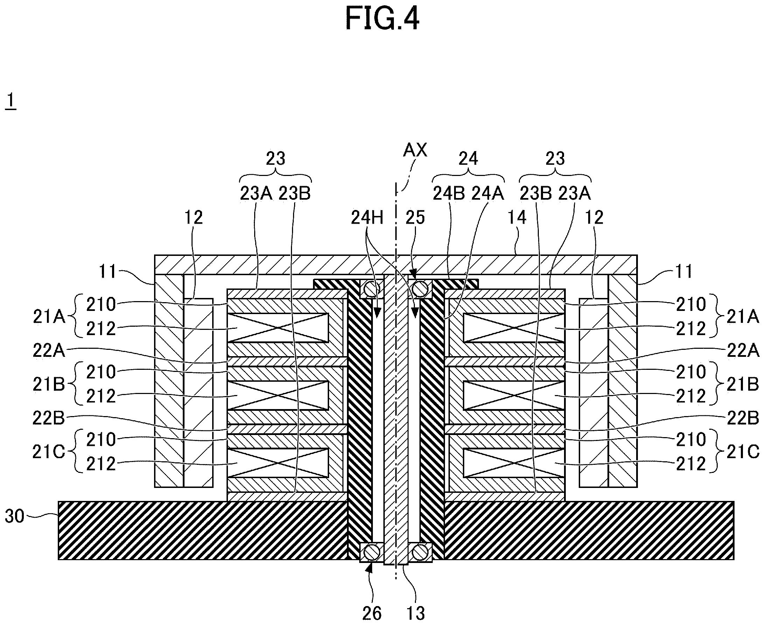

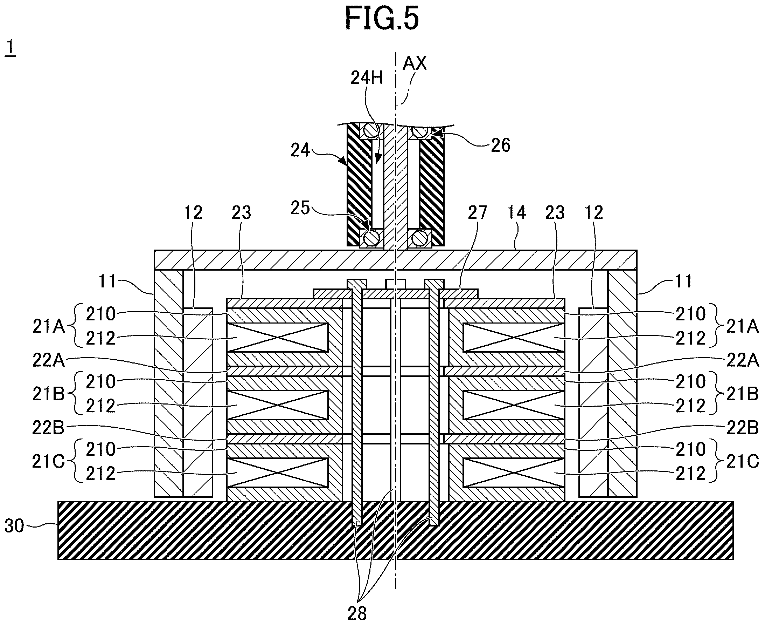

The rotation shaft member 13 has, for example, a substantially cylindrical shape elongated in the axial direction, and is arranged such that the rotation axis AX of the claw pole motor 1 and the cylindrical axis substantially coincide. For example, as illustrated in FIGS. 3 and 4, the rotation shaft member 13 is provided so as to extend in the axial direction through a hollow portion (a through-hole 210D described later) on the radially inner side of the stator 20. For example, as illustrated in FIG. 5, the rotation shaft member 13 may be provided so as to extend in the axial direction in a manner offset from the stator 20 in the axial direction.

As illustrated in FIGS. 3 to 5, the rotation shaft member 13 is rotatably supported by, for example, bearings 25 and 26 provided at respective ends of the support member 24 in the axial direction. As described below, the support member 24 is fixed to the fixing member 30. As a result, the rotation shaft member 13 can rotate about the rotation axis AX relative to the fixing member 30. As illustrated in FIGS. 3 to 5, the rotation shaft member 13 is coupled to the rotor core 11 via the coupling member 14 in the axial direction, for example, at an end of the claw pole motor 1 opposite to the end of the claw pole motor 1 on the side of the fixing member 30 (hereinafter, referred to as the "tip of the claw pole motor 1" for convenience).

The coupling member 14 couples the rotor core 11 and the permanent magnets 12 to the rotation shaft member 13, as described above. The coupling member 14 is shaped, for example, substantially as a disc that closes the substantially cylindrical open end of the rotor core 11. Thus, the rotor core 11 and the permanent magnets 12 fixed to the inner circumferential surface of the rotor core 11 can rotate about the rotation axis AX of the claw pole motor 1 relative to the fixing member 30 in accordance with the rotation of the rotation shaft member 13.

As illustrated in FIGS. 2 to 5, a stator 20 is arranged radially inside the rotor 10 (the rotor core 11 and the permanent magnet 12). The stator 20 is an armature and includes a plurality of (in this example, three) claw pole stator units 21, a plurality of (in this example, two) interphase members 22, an end member 23, and the support member 24.

In the case of the inner rotor type, the stator 20 is arranged radially outside the rotor 10. Further, an interphase member 22, the end member 23, and the support member 24 are not essential and may be omitted as appropriate.

As illustrated in FIGS. 7 to 10, the stator unit 21 includes a stator core 210 and a coil 212.

The stator core 210 is provided to surround the coil 212. The stator core 210 includes a pair of stator cores 211 (an example of a first core and a second core).

The stator core 211 is formed of a soft magnetic material such as a dust core, for example. Further, the surface of the stator core 211 may be insulated with an oxide film or the like, for example. The stator core 211 includes a yoke portion 211A, a plurality of claw magnetic poles (also referred to as "claw poles") 211B, a yoke portion 211C, and a hole portion 211D.

The yoke portion 211A (an example of a second yoke portion) is provided so as to cover the axial end of the coil 212. The yoke portion 211A has a substantially annular shape when viewed along the axial direction, and has a predetermined thickness in the axial direction.

The plurality of claw magnetic poles 211B are arranged at substantially equal intervals in the circumferential direction on the outer circumferential surface of the yoke portion 211A, and protrude radially outward from the outer circumferential surface of the yoke portion 211A. For example, the number of claw magnetic poles 211B is the same as the number of magnetic poles of the permanent magnets 12 arranged circumferentially on the inner surface in the radial direction of the opposed rotor 10. The claw magnetic poles 211B each include a claw magnetic pole portion 211B1.

The claw magnetic pole portion 211B1 has a predetermined width in the circumferential direction and a thickness in the axial direction approximately equal to the thickness in the axial direction of the yoke portion 211A, and protrudes from the outer peripheral surface of the yoke portion 211A in a shape extending by a predetermined length in the radial direction.

The claw magnetic pole 211B includes a claw magnetic pole portion 211B2. Thus, the facing area between the magnetic pole surface of the claw magnetic pole 211B magnetized by the armature current of the coil 212 and the rotor 10 can be relatively wide. Therefore, the output torque of the claw pole motor 1 can be relatively increased, and the output of the claw pole motor 1 can be improved.

The claw magnetic pole portion 211B2 protrudes from the tip of the claw magnetic pole portion 211B1 toward the other of the pair of stator cores 211 in the axial direction by a predetermined length. For example, as illustrated in FIGS. 7, 9, and 10, the width of the claw magnetic pole portion 211B2 may be constant regardless of the distance from the claw magnetic pole portion 211B1. As another example, as illustrated in FIG. 8, the claw magnetic pole portion 211B2 may have a tapered shape in which the width thereof becomes narrower farther from the claw magnetic pole portion 211B1 in the axial direction.

The claw magnetic pole portion 211B2 may be omitted.

The yoke portion 211C is configured such that a portion near the inner peripheral surface of the yoke portion 211A protrudes toward the other of the pair of stator cores 211 by a predetermined amount, and functions as a partition wall surrounding the inside in the radial direction of the coil 212.

For example, as illustrated in FIGS. 7 and 8, the yoke portion 211C has an annular shape having an outer diameter smaller than that of the yoke portion 211A when viewed along the axial direction. Thereby, the tips of these yoke portions 211C contact each other, and a yoke portion 210C (an example of a first yoke portion) is formed in the stator core 210 covering the inside of the coil 212 in the radial direction, by the pair of yoke portions 211C. In the stator core 210, a space for accommodating the coil 212 is formed between the yoke portions 211A and claw magnetic poles 211B (claw magnetic pole portions 211B1) at each end in the axial direction. In this case, the pair of stator cores 211 are coupled by mating surfaces facing each other in the axial direction, that is, mating surfaces perpendicular to each other in the axial direction. In this case, two times the protrusion amount of the yoke portion 211C from the yoke portion 211A is equal to or larger than the protrusion amount of the claw magnetic pole portion 211B2 from the claw magnetic pole portion 211B1. Thus, it is possible to prevent the tips of the claw magnetic pole portions 211B2 from protruding from both end surfaces in the axial direction of the two stator cores 211 in a state where the pair of stator cores 211 are connected.

Further, for example, as illustrated in FIGS. 9 and 10, the yoke portions 211A and 211C may be provided so that the pair of stator cores 211 are coupled on surfaces facing each other in the radial and circumferential directions. Specifically, the yoke portion 211A includes the yoke portions 211A1 and 211A2. The yoke portion 211A1 corresponds to a coupling portion with the base end of the claw magnetic pole 211B on the outer side in the radial direction of the yoke portion 211A, and may have a substantially annular shape when viewed along the axial direction. The yoke portion 211A2 corresponds to a coupling portion with the base end of the yoke portion 211C on the radially inner side of the yoke portion 211A, may protrude radially inward from the inner surface of the yoke portion 211A1, and may have a fan shape when viewed along the axial direction. A plurality of the yoke portions 211A2 (in this example, four) are arranged at equal intervals in the circumferential direction, and are configured so that the shape viewed in the axial direction of the notch portions between two adjacent yoke portions 211A2 in the circumferential direction and the shape viewed in the axial direction of the yoke portion 211A2 are substantially the same. The yoke portion 211C is provided so as to protrude axially from each of the plurality of yoke portions 211A2 toward the other stator core 211. Thus, the pair of stator cores 211 can be coupled in such a manner that the tip portion of the yoke portion 211C fits into a notch portion between two adjacent yoke portions 211A2 in the circumferential direction of the other stator core 211. In this case, a yoke portion 210C covering the inside in the radial direction of the coil 212 is formed in the stator core 210 by the yoke portions 211C, which are alternately fitted in the circumferential direction of the pair of stator cores 211.

The hole portion 211D is formed by the inner peripheral surfaces of the yoke portions 211A and 211C, and is provided so as to penetrate in the axial direction.

For example, as illustrated in FIGS. 7 and 8, when the tips of the yoke portions 211C of the pair of stator cores 211 are brought into contact with each other, the hole portions 211D communicate with each other, and a through-hole 210D (one example of the first through-hole) penetrating in the axial direction is formed in the radial center of the stator core 210.

Further, as illustrated in FIGS. 9 and 10, for example, a through-hole 210D penetrating in the axial direction is formed in the stator core 210 by the inner peripheral surfaces of the yoke portions 211A and 211C that are alternately fitted in the circumferential direction of the pair of stator cores 211.

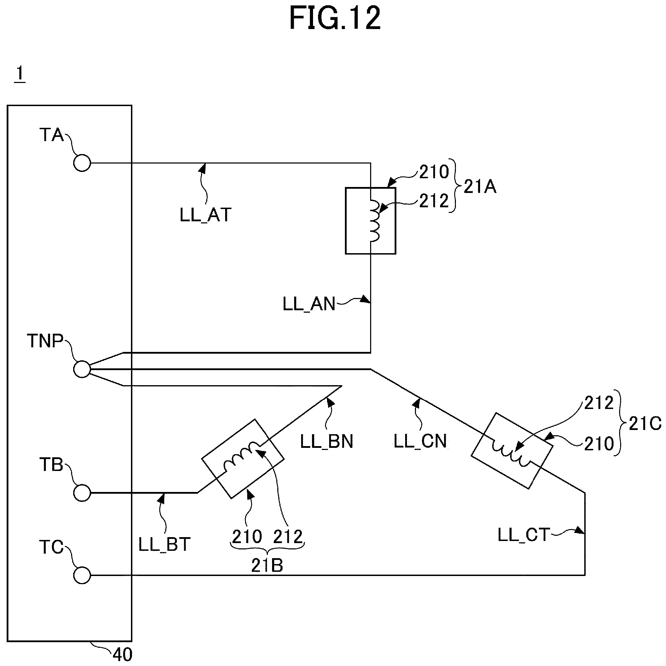

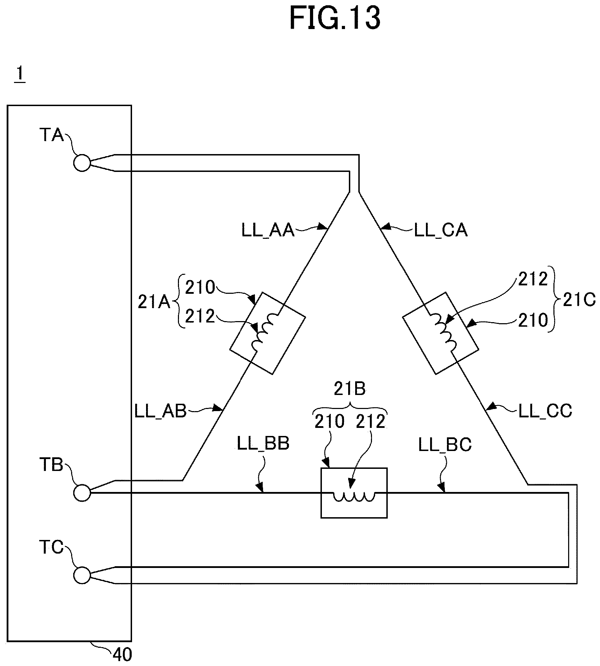

The coil (also referred to as "coil wire") 212 is formed by winding a conductor wire in an annular shape when viewed along the axial direction, with the axial center of the stator 20, that is, the rotation axis AX of the claw pole motor 1 as the substantial center. For example, the conductor wire of the coil 212 may be wound so as to form a plurality of layers in the axial direction, may be wound so as to form a plurality of rows in the radial direction, or may be wound so as to form a plurality of layers in the axial direction and form a plurality of rows in the radial direction. The conductor wire of the coil 212 is, for example, a round wire having a circular cross section. The conductor wire of the coil 212 may be, for example, a square wire or a rectangular wire having a rectangular cross section. When coils 212 of a plurality of phases (in this example, three phases) are connected by Y-connection (star connection), one end of the coil 212 is electrically connected to an external terminal, and the other end is electrically connected to a neutral point (see FIG. 12 described later). As another example, when coils 212 of a plurality of phases are connected by Δ-connection (delta connection), one end of the coil 212 is electrically connected to one external terminal (external terminal of the same phase) of the claw pole motor 1, and the other end is electrically connected to another external terminal (external terminal of a different phase) of the claw pole motor 1 (see FIG. 13 described later). The coil 212 is arranged between a pair of stator cores 211 (the yoke portions 211A) in the axial direction. The coil 212 is wound so that the inner peripheral portion thereof is radially outward from the yoke portion 211C of the pair of stator cores 211 and the outer peripheral portion thereof is radially inward from the claw pole portions 211B2 of the pair of stator cores 211.

An insulating portion is arranged between the stator core 211 and the conductor wire of the coil 212 to electrically insulate between the stator core 211 and the conductor wire of the coil 212. The insulating portion may be, for example, an insulating paper, a resin-molded insulator, silicon rubber, a bobbin, or a resin mold for the stator core 211 or the coil 212, which is arranged between the stator core 211 and the coil 212. The insulating portion may be, for example, a resin insulating film provided on the surface of the conductor wire of the coil 212.

As illustrated in FIG. 2, the pair of stator cores 211 are combined so that the claw magnetic poles 211B of one stator core 211 and the claw magnetic poles 211B of the other stator core 211 are arranged alternately in the circumferential direction. When an armature current flows through the annular coil 212, the claw magnetic poles 211B formed on one of the stator cores 211 in the pair and the claw magnetic poles 211B formed on the other are magnetized to magnetic poles different from each other. Thus, in the pair of stator cores 211, each of the claw magnetic poles 211B protruding from one stator core 211 has a magnetic pole different from the other claw magnetic poles 211B that are adjacent thereto in the circumferential direction and protrude from the other stator core 211. Therefore, due to the armature current flowing through the coil 212, the N-pole claw magnetic poles 211B and the S-pole claw magnetic poles 211B are alternately arranged in the circumferential direction of the pair of stator cores 211 at a certain instant. That is, the armature current is alternating current, and the claw magnetic poles 211B exhibit magnetic poles which are alternately out of phase by 180° in the circumferential direction.

In the case of the inner rotor type, the yoke portion 210C (the yoke portions 211C) of the claw pole-type stator core 210 is provided at the radially outer end portion, and the claw magnetic poles 211B are provided so as to extend radially inward from the yoke portions 211C.

As illustrated in FIGS. 2 to 5 and 11, a plurality of stator units 21 are axially stacked.

The plurality of stator units 21 include stator units 21 for a plurality of phases (in this example, three phases). Specifically, the plurality of stator units 21 include a stator unit 21A corresponding to the U-phase, a stator unit 21B corresponding to the V-phase, and a stator unit 21C corresponding to the W-phase. The plurality of stator units 21 are stacked from the tip of the claw pole motor 1 in the order of the stator unit 21A corresponding to the U-phase, the stator unit 21B corresponding to the V-phase, and the stator unit 21C corresponding to the W-phase.

For example, as illustrated in FIG. 2, the stator units 21 of different phases adjacent in the axial direction are arranged so that their positions in the circumferential direction differ from each other by the above-described angle θe [°]. Specifically, the stator units 21A to 21C are arranged so that their positions in the circumferential direction differ from each other by an electric angle of 120° between adjacent stator units 21. In this case, as illustrated in FIGS. 3 to 5, the plurality of permanent magnets 12 arranged in the circumferential direction are arranged so that their positions in the circumferential direction are substantially the same in the axial range corresponding to all the stator units 21.

Further, as illustrated in FIG. 11, the stator units of multiple phases stacked in the axial direction may be arranged so that their positions in the circumferential direction are the same. In this case, the permanent magnets 12 opposed to each of the two axially adjacent stator units 21 are arranged so as to be displaced in the circumferential direction by an electric angle of θe [°], as described above.

The claw pole motor 1 may have a plurality of stator units 21 of the same phase. For example, two stator units 21 corresponding to the U-phase, two stator units 21 corresponding to the V-phase, and two stator units 21 corresponding to the W-phase may be axially stacked in this order. As described above, the claw pole motor 1 may be driven by single-phase or two-phase armature currents, or by armature currents of four or more phases. In this case, the stator units 21 in an amount corresponding to a number obtained by multiplying the number of phases by the number of stator units 21 for each phase are axially stacked.

The interphase member 22 is provided between the axially adjacent stator units 21 of different phases. The interphase member 22 is, for example, a nonmagnetic material. Thus, a predetermined distance is secured between the two stator units 21 of different phases, and magnetic flux leakage between the two stator units 21 of different phases can be prevented. The interphase members 22 include interphase members 22A and 22B.

The interphase member 22A is provided between the axially adjacent U-phase stator unit 21A and V-phase stator unit 21B. The interphase member 22A has, for example, a substantially cylindrical shape (substantially disc-shaped) having a predetermined thickness, and a through-hole penetrating in the axial direction is formed in the central portion in the radial direction. The through-hole has, for example, a substantially circular shape having a diameter equal to or smaller than that of the hole portion 211D of the stator core 211 when viewed along the axial direction. Hereinafter, the same may be applied to the interphase member 22B.

The interphase member 22B is provided between the V-phase stator unit 21B and the W-phase stator unit 21C that are adjacent in the axial direction.

The end member 23 is provided at an end in the axial direction of the claw pole motor 1 of the plurality of stator units 21 to be stacked.

For example, as illustrated in FIGS. 3 and 5, the end member 23 is provided only at the tip of the claw pole motor 1. Specifically, the end member 23 is provided so as to be in contact with an end surface of the stator unit 21A on the side opposite to the side facing the stator unit 21B in the axial direction. The end member 23 has, for example, a substantially cylindrical shape (substantially disc-shaped) having a predetermined thickness, and a through-hole penetrating in the axial direction is formed in a central portion in the radial direction. The through-hole has, for example, a substantially circular shape having a diameter equal to or smaller than that of the hole portion 211D of the stator core 211 when viewed along the axial direction. Hereinafter, the same applies to the end members 23A and 23B described later. The end member 23 is, for example, a nonmagnetic material. This makes it possible to prevent magnetic flux leakage from the stator core 211 of the stator unit 21A.

For example, as illustrated in FIG. 4, the end member 23 may be provided at both the distal end and the base end of the claw pole motor 1 of the plurality of stator units 21. Specifically, the end member 23 may include end members 23A and 23B provided at the distal end and the base end of the claw pole motor 1 of the plurality of stator units 21, respectively. The end member 23A corresponds to the end member 23 of FIGS. 3 and 5. The end member 23B is arranged between the stator unit 21C and the fixing member 30. Thus, the magnetic flux leakage from the stator core 211 of the stator unit 21C can be prevented.

The support member 24, to which the bearings 25 and 26 are fixed, rotatably supports the rotation shaft member 13 via the bearings 25 and 26.

For example, as illustrated in FIGS. 3 and 4, the support member 24 is provided so as to penetrate the stator 20 in the axial direction on the radial inside thereof. Specifically, the support member 24 includes an insertion portion 24A and an enlarged diameter portion 24B.

The insertion portion 24A has, for example, a substantially cylindrical shape having an outer diameter smaller than the inner diameter of the hole portion 211D of the stator core 211, and the stator 20 (the stator units 21A to 21C) is arranged radially outward from the outer peripheral surface thereof. The tip of the insertion portion 24A is fixed to the fixing member 30. That is, the insertion portion 24A is provided so as to extend axially from the fixing member 30. For example, as illustrated in FIGS. 3 and 4, the insertion portion 24A is fixed to the fixing member 30 by being fitted into an axially penetrating hole formed in the fixing member 30 by pressing or the like. Further, for example, the insertion portion 24A may be fixed to the fixing member 30 by being processed to have a male screw at the tip thereof, and being inserted into an axially penetrating hole formed in the fixing member 30 and having a nut screwed into the tip thereof exposed on the opposite side.

The enlarged diameter portion 24B is provided at the end of the insertion portion 24A on the tip side of the claw pole motor 1, and has a disk shape having an outer diameter larger than that of the hole portion 211D of the stator core 211. Thus, as illustrated in FIG. 4, the end member 23, the stator unit 21A, the interphase member 22A, the stator unit 21B, the interphase member 22B, and the stator unit 21C into which the insertion portion 24A is inserted can be fixed by being sandwiched between the enlarged diameter portion 24B and the fixing member 30. In particular, the strength of the dust core against tensile stress is relatively low, while the strength against compressive stress is relatively high. Therefore, by having compressive stress act on the stator core 211 formed by the dust core, the fixing to the stator units 21A to 21C can be accomplished.

Further, a hole portion 24H penetrating in the axial direction is provided in the central portion in the radial direction of the support member 24. Bearings 25 and 26 are attached to respective ends of the hole portion 24H, and the rotation shaft member 13 is arranged so as to extend in the axial direction of the hole portion 24H and is rotatably supported by the bearings 25 and 26.

For example, as illustrated in FIG. 5, the support member 24 may be arranged so as to be offset from the stator 20 in the axial direction. Specifically, the support member 24 is arranged so as to extend in the axial direction at the center in the radial direction on the side opposite to the stator 20 in the axial direction as viewed from the coupling member 14. The support member 24 is provided with a hole portion 24H penetrating in the axial direction. The hole portion 24H is provided with bearings 25 and 26 at a distance spaced from each other in the axial direction to some extent, and the rotation shaft member 13 is rotatably supported by the bearings 25 and 26. In this case, the support member 24 is fixed to the fixing member 30 via another member (for example, a housing), not illustrated.

For example, as illustrated in FIG. 5, the claw pole motor 1 may include a fixing member 27 and a bolt 28.

The fixing member 27 is provided axially on the side opposite to the side facing the stator unit 21A of the end member 23. The fixing member 27 is substantially disc-shaped with an outer diameter larger than the inner diameter of the hole portion 211D of the stator core 211, and is arranged substantially coaxially with the central portion in the radial direction. The fixing member 27 also has a plurality of (in this example, four) through-holes arranged at equal intervals in the circumferential direction in a concentric circle, inward in the radial direction relative to the hole portion 211D of the stator core 211, when viewed along the axial direction.

The bolt 28 has a length sufficiently larger than the sum of the axial length of the stator 20 and the thickness of the fixing member 27. The bolt 28 is provided in a plurality (in this example, four), similar to the through-holes provided in the fixing member 27. The bolt 28 is inserted into the through-hole of the fixing member 27, passes through a space (hole portion), inside the stator 20 in the radial direction, formed by the hole portion 211D of the stator core 211 and the like, and the male screw at the tip is screwed into a hole portion processed to be a female screw formed in the fixing member 30. Thus, the fixing member 27 is fixed to the fixing member 30 by the bolt 28. Therefore, as illustrated in FIG. 5, the end member 23, the stator unit 21A, the interphase member 22A, the stator unit 21B, the interphase member 22B, and the stator unit 21C can be fixed between the fixing member 27 and the fixing member 30.

The fixing member 30 (one example of the holding portion) is, for example, substantially disc-shaped with an outer diameter larger than that of the rotor 10 (rotor core 11) when viewed along the axial direction.

For example, as illustrated in FIGS. 3 and 4, the rotor 10 is rotatably supported by the fixing member 30 via the support member 24 as described above, and the stator 20 is held in the axial direction to be fixed. Further, as illustrated in FIG. 5, for example, the stator 20 is fixed to the fixing member 30 via the fixing member 27 and the bolt 28 as described above.

The stator 20 may be axially fixed to the fixing member 30, for example, by coupling the stator unit 21, the interphase member 22, and the end member 23 to components adjacent to each other with an adhesive or the like, and by coupling the stator to the fixing member 30 with an adhesive or the like. In this case, the enlarged diameter portion 24B and the fixing member 27 may be omitted.

The fixing member 30 is made of a metal having relatively high thermal conductivity such as copper or aluminum, for example. Thus, the thermal energy generated in the coil 212 can be efficiently conducted by the fixing member 30. Therefore, cooling of the coil 212 can be promoted. Further, the fixing member 30 may have a step shape, a fin shape, a pin shape, or the like in a region other than the region facing the stator 20 in the axial direction. Thus, the surface area of the fixing member 30 becomes relatively large, and heat radiation to the outside air can be promoted. Therefore, the temperature rise of the fixing member 30 when the heat generated in the coil 212 is conducted can be further prevented, and the heat generated in the coil 212 can be reliably transferred to the fixing member 30 to promote cooling of the coil 212.

[Circuit configuration of claw pole motor]

Next, the circuit configuration of the claw pole motor 1 according to the present embodiment will be described with reference to FIGS. 12 and 13.

FIGS. 12 and 13 are diagrams illustrating one example and another example of the circuit configuration of the claw pole motor 1. Specifically, FIGS. 12 and 13 are schematic diagrams illustrating the circuit configuration of the claw pole motor 1 in the case where the coil 212 of a plurality of phases (three phases) is connected by a Y-connection and a $\Delta$-connection, respectively.

As illustrated in FIGS. 12 and 13, the claw pole motor 1 includes a control device 40.

The control device 40 controls the power supplied to the claw pole motor 1. For example, the control device 40 is a power converting device including a rectifier circuit that generates DC power from power received from a predetermined AC power source such as a commercial power source, a smoothing circuit that smooths the DC power, and an inverter circuit that outputs AC power of a predetermined voltage or a predetermined frequency from the DC power. The control device 40 includes, for example, a U-phase terminal TA, a V-phase terminal TB, and a W-phase terminal TC that are connected to the U-phase, V-phase, and W-phase output lines of the inverter circuit and output U-phase, V-phase, and W-phase currents to the outside. As illustrated in FIG. 12, in the case of Y-connection, the control device 40 may include a neutral point terminal TNP.

Note that the neutral point terminal TNP may be omitted. This is because the neutral point in the case of Y-connection need not be provided in the control device 40.

As illustrated in FIG. 12, in the case of Y-connection, the coil 212 of the U-phase stator unit 21A has one end connected to the U-phase terminal TA through a lead wire LL_AT (an example of an electric wire) and the other end connected to the neutral point terminal TNP through a lead wire LL_AN (an example of an electric wire). Similarly, the coil 212 of the V-phase stator unit 21B has one end connected to the V-phase terminal TB through a lead wire LL_BT (an example of an electric wire) and the other end connected to the neutral point terminal TNP through a lead wire LL_BN (an example of an electric wire). Similarly, the coil 212 of the W-phase stator unit 21C has one end connected to the W-phase terminal TC through a lead wire LL_CT (an example of an electric wire) and the other end connected to the neutral point terminal TNP through a lead wire LL_CN (an example of an electric wire).

Thus, in the case of Y-connection, single lead wires (lead wire LL_AT, lead wire LL_BT, and lead wire LL_CT) are connected respectively (one-to-one) to the U-phase terminal TA, the V-phase terminal TB, and the W-phase terminal TC. Further, three lead wires (lead wires LL_AN, LL_BN, LL_CN) are connected to the neutral point terminal TNP.

As illustrated in FIG. 13, in the case of $\Delta$-connection, the coil 212 of the U-phase stator unit 21A has one end connected to the U-phase terminal TA through a lead wire LL_AA (an example of an electric wire) and the other end connected to the V-phase terminal TB through a lead wire LL_AB (an example of an electric wire). Similarly, the coil 212 of the V-phase stator unit 21B has one end connected to the V-phase terminal TB through a lead wire LL_BB (an example of an electric wire) and the other end connected to the W-phase terminal TC through a lead wire LL_BC (an example of an electric wire). Similarly, the coil 212 of the W-phase stator unit 21C has one end connected to the W-phase terminal TC through a lead wire LL_CC (an example of an electric wire) and the other end connected to the U-phase terminal TA through a lead wire LL_CA (an example of an electric wire).

Thus, in the case of $\Delta$-connection, sets of two lead wires (lead wires LL_AA, LL_CA, lead wires LL_AB, LL_BB, and lead wires LL_BC, LL_CC) are connected respectively (two-to-one) to the U-phase terminal TA, the V-phase terminal TB, and the W-phase terminal.

Hereinafter, the lead wires LL_AT, LL_BT, LL_CT, LL_AN, LL_BN, LL_CN in the case of Y-connection and the lead wires LL_AA, LL_AB, LL_BB, LL_BC, LL_CA, LL_CC in the case of $\Delta$-connection may be collectively or individually referred to as the lead wire LL.

[Layout of lead wire of coil]

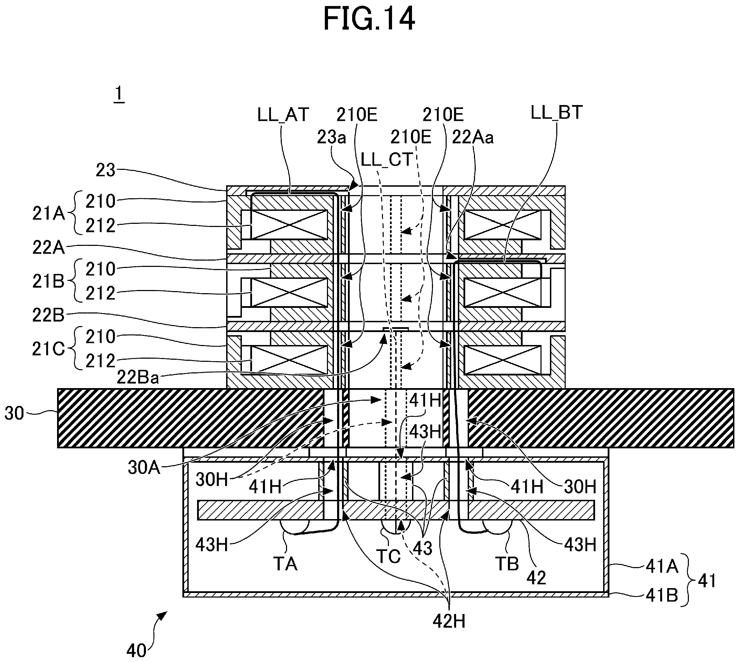

Next, the layout of the lead wires LL of the coil 212 will be described with reference to FIGS. 14 to 21 in addition to FIGS. 1 to 13. Hereinafter, with reference to the states illustrated in FIGS. 14, 16, 17, and 21, in the axial direction, the direction in which the stator 20 is provided as viewed from the fixing member 30 may be conveniently referred to as "up" and the direction in which the fixing member 30 is provided as viewed from the stator 20 may be conveniently referred to as "down".

Incidentally, the description will be made mainly with respect to the case of the Y-connection, but as a matter of course, the same configuration may be adopted for the case of the Δ-connection.

<First example>

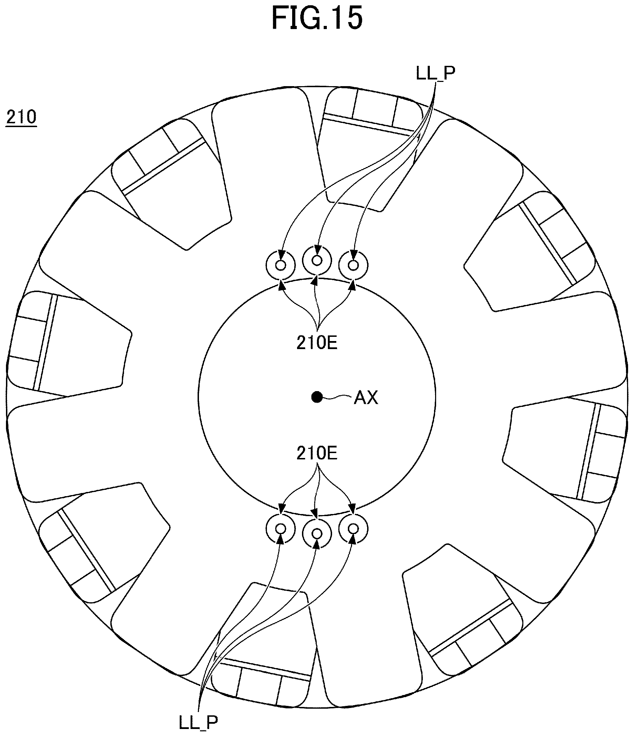

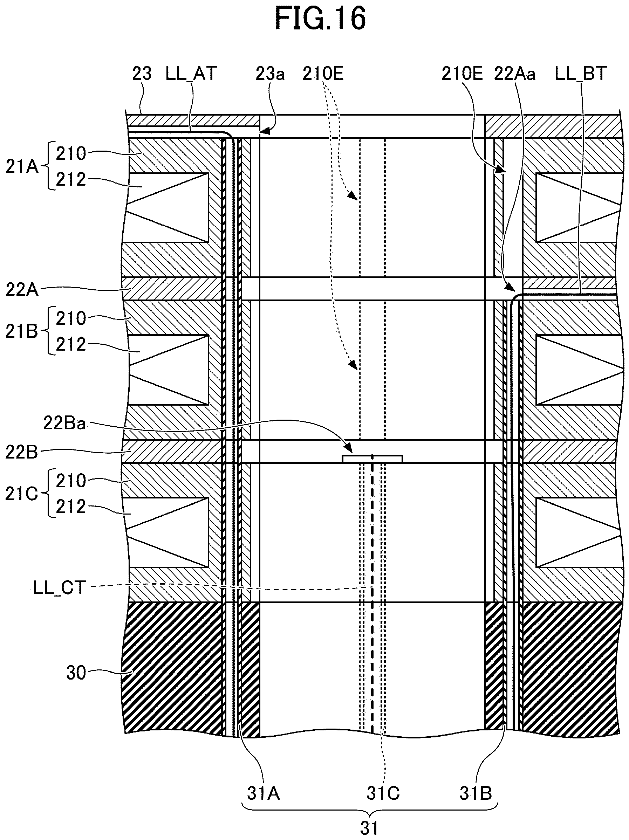

FIG. 14 is a vertical sectional view schematically illustrating a first example of the layout of the lead wires LL of the coil 212 in the claw pole motor 1. More specifically, FIG. 14 is a diagram illustrating a specific example of the layout of the lead wires LL of the coil 212 in the case of the Y-connection. FIG. 15 is a top view illustrating an example of the through-hole 210E of the stator core 210. FIG. 16 is a vertical sectional view illustrating an example of the tubular member 31 arranged in the through-hole 210E of the stator core 210.

In FIG. 14, in order to illustrate the layout of the lead wires LL, for the sake of convenience, the rotation shaft member 13, the support member 24, the bearings 25 and 26, and other components arranged in the hollow portion (the through-hole 210D and a hole portion 30A) of the central portion in the radial direction of the stator 20 and the fixing member 30 are omitted. The same applies to FIGS. 16, 17, and 21. Further, in FIG. 14, the layout of the lead wires LL_AT, LL_BT, and LL_CT in the case of the Y-connection is illustrated, but the layout of the lead wires LL_AN, LL_BN, and LL_CN may be similarly configured.

As illustrated in FIG. 14, the stator 20 is arranged on one end surface in the axial direction of the fixing member 30, and the control device 40 is arranged on the other end surface in the axial direction of the fixing member 30.

The yoke portion 210C of the stator core 210 is provided with a through-hole 210E (an example of a second through-hole) that penetrates between both end portions in the axial direction of the stator core 210. The cross-sectional shape of the through-hole 210E is, for example, circular. The cross-sectional shape of the through-hole 210E may be a shape other than circular. Specifically, the cross-sectional shape of the through-hole 210E may be a rectangular shape, a slit shape provided so as to extend in the circumferential direction, or any other shape.

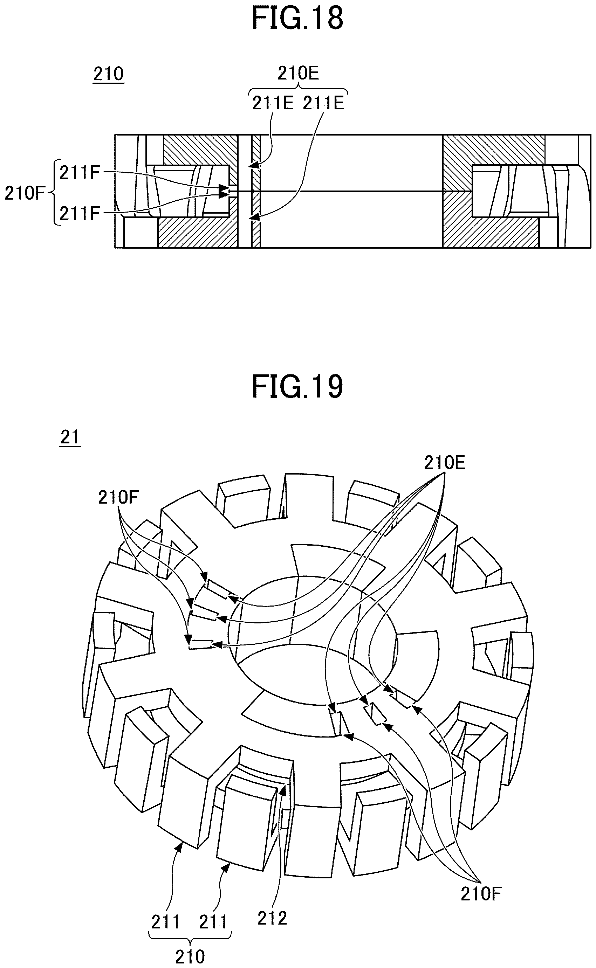

For example, as illustrated in FIGS. 7 and 8, in the case of a structure in which the pair of stator cores 211 are divided in the axial direction by the yoke portions 210C, the through-holes 210E are provided so as to extend across both yoke portions 211C of the pair of stator cores 211 in the axial direction. Specifically, the through-hole 210E may be configured such that the through-hole 211E provided in the yoke portion 211C of one stator core 211 and the through-hole 211E provided in the yoke portion 211C of the other stator core 211 communicate in the axial direction (see FIG. 18).

As another example, as illustrated in FIGS. 9 and 10, in the case where the pair of stator cores 211 are divided in the circumferential and radial directions by the yoke portion 210C, the through-hole 210E is provided so as to penetrate the yoke portion 211C of either one of the stator cores 211 in the pair in the axial direction. The extending direction of the through-hole 210E may be parallel to the axial direction or inclined relative to the axial direction.

The through-holes 210E of the stator cores 210 of the stator units 21A to 21C are arranged so as to connect in the axial direction. Specifically, all of the through-holes 210E of the stator cores 210 of the stator units 21A to 21C may be arranged so as to be overlapping at least partially when viewed along the axial direction. The inner peripheral surfaces of the interphase members 22A and 22B are arranged so as not to cover (overlap) a part or all of the through-holes 210E when viewed along the axial direction. Thus, the lead wires LL extending from the coil 212 of the stator cores 210 of the stator units 21A to 21C can be laid out through the through-holes 210E toward the fixing member 30 and the control device 40 in the axial direction.

When the end member 23B is provided, the inner circumferential surface of end member 23B is arranged so as not to cover (overlap) part or all of the through-holes 210E and 30H when viewed axially. Thereby, the lead wire LL extending from the coil 212 of the stator core 210 of stator units 21A to 21C can be laid out through the through-holes 210E toward the fixing member 30 and the control device 40 in the axial direction. Further, the inner circumferential surfaces of interphase members 22A and 22B may be farther inward in the radial direction than the through-holes 210E, and instead, interphase members 22A and 22B may be provided with axial through-holes overlapping at least a portion of through-holes 210E when viewed axially. Similarly, when the end member 23B is provided, the end member 23B may be provided with axial through-holes overlapping at least a portion of both the through-holes 210E and 30H when viewed axially.

The interphase member 22A may be provided with a protrusion that is inserted into at least one of the unused through-holes 210E to close the opening at the axial end of this through-hole 210E. Thus, the unused through-hole 210E can be covered to prevent foreign matter from entering. The interphase member 22A can also perform a function of positioning a through-hole 210E between vertically adjacent stator units 21 (in this example, the stator units 21A, 21B) by a protrusion that is inserted into the through-hole 211E. The same may apply to interphase member 22B.

The fixing member 30 is provided with a through-hole 30H.

The through-hole 30H is arranged in the fixing member 30 radially outward from the hole portion 30A, which is at the central portion in the radial direction, to which the support member 24 is attached, and penetrates between the opposite ends of the fixing member 30 in the axial direction. The through-hole 30H is arranged so as to be axially connected with the through-holes 210E of the stator cores 210 of the stator units 21A to 21C. Specifically, the through-hole 30H may be arranged so as to overlap at least a portion of the through-hole 210E of the stator core 210 of the stator units 21A to 21C when viewed along the axial direction. Thus, a lead wire LL can be laid out so as to pass between one end of the fixing member 30 where the stator 20 is arranged and the other end where the control device 40 is arranged, and the ends of the lead wire LL can be connected respectively to the coil 212 and the control device 40.

As described above, the neutral point need not be provided in the control device 40. Therefore, for example, when the neutral point is arranged farther on the stator 20 side (upper side) than the fixing member 30 in the axial direction, the lead wire LL_AN, the lead wire LL_BN, and the lead wire LL_CN do not pass through the through-hole 30H.

For example, as illustrated in FIG. 15, six through-holes 210E are provided in the stator core 210 along with the six lead wires LL. Further, the number of through-holes 210E provided in the stator core 210 may be seven or more, or five or less. In the latter case, a plurality of lead wires LL are arranged in one through-hole 210E. The same may be applied to the cases of the second and third examples described below.

Further, as illustrated in FIG. 15, a pin LL_P may be embedded in the through-hole 210E. By connecting the electric wire drawn from the coil 212 and the electric wire drawn from the control device 40 to the pin LL_P, the coil 212 and the control device 40 can be electrically connected. In this case, the lead wire LL includes a pin LL_P and an electric wire connecting the pin LL_P to each of the coil 212 and the control device 40. The same may be applied to the case of the second and third examples described below.

A plurality of pins LL_P may be embedded in one through-hole 210E. For example, in FIG. 15, three through-holes 210E adjacent to each other in the circumferential direction may be connected adjacent to each other.

In this example, the lead wire LL_AT is arranged to pass through a gap between the claw magnetic poles 211B adjacent to each other in the circumferential direction of the upper stator core 211 and to be drawn from the coil 212 of the stator unit 21A onto the stator core 210. A through-hole may be provided in the claw magnetic pole 211B, and the lead wire LL_AT may be drawn from the coil 212 of the stator unit 21A onto the stator core 210 in the axial direction through the through-hole.

A groove portion 23a is provided on the lower surface of the end member 23 adjacent to the stator unit 21A.

The groove portion 23a is provided to connect a position in the circumferential direction and the radial direction where the lead wire LL_AT is drawn onto the stator core 210 of the stator unit 21A and a position in the circumferential direction and the radial direction where the through-hole 210E of the stator core 210 of the stator unit 21A is provided. Thus, the lead wire LL_AT can be laid out between the coil 212 of the stator unit 21A and the through-hole 210E of the stator core 210 of the stator unit 21A through the groove portion 23a.

The lead wire LL_AT is arranged so as to pass through, in the axial direction, the through-hole 210E of the stator core 210 of the stator unit 21A, the stator unit 21B, and the stator unit 21C and the through-hole 30H of the fixing member 30 in the order from the top. Thus, the lead wire LL_AT can be laid out so as to connect between the coil 212 of the stator unit 21A and the control device 40 through the through-holes 210E of the stator cores 210 of the stator units 21A to 21C and the through-hole 30H of the fixing member 30.

The same layout as that of the lead wire LL_AT may be adopted for the lead wire LL_AN extending from the coil 212 of the stator unit 21A.

In this example, the lead wire LL_BT is arranged so as to pass through the gap between the claw magnetic poles 211B that are adjacent in the circumferential direction of the upper stator core 211 and to be drawn from the coil 212 of the stator unit 21B onto the stator core 210.

A groove portion 22Aa is provided on the lower surface of the interphase member 22A adjacent to the stator unit 21B.

The groove portion 22Aa is provided so as to connect between a circumferential and radial position where the lead wire LL_BT is drawn out on the stator core 210 of the stator unit 21B and a circumferential and radial position where the through-hole 210E of the stator core 210 of the stator unit 21B is provided. Thus, the lead wire LL_BT can be laid out between the coil 212 of the stator unit 21B and the through-hole 210E of the stator core 210 of the stator unit 21B through the groove portion 22Aa.

The lead wire LL_BT is arranged so as to pass axially through the through-hole 210E of the stator core 210 of the stator unit 21B and the stator unit 21C, and the through-hole 30H of the fixing member 30, in the order from the top. Thus, the lead wire LL_BT can be laid out so as to connect between the coil 212 of the stator unit 21B and the control device 40 through the through-holes 210E of the stator cores 210 of the stator units 21B and 21C, and the through-hole 30H of the fixing member 30.

The same layout as that of the lead wire LL_BT may be adopted for the lead wire LL_BN extending from the coil 212 of the stator unit 21B. The stator core 210 of the stator unit 21A need not have the through-hole 210E axially connected to the through-holes 210E of the stator cores 210 of the stator units 21B and 21C in which the lead wire LL_BT is arranged.

In this example, the lead wire LL_CT is arranged so as to pass through a gap between the claw magnetic poles 211B adjacent in the circumferential direction of the upper stator core 211, and to be drawn from the coil 212 of the stator unit 21C onto the stator core 210.

A groove portion 22Ba is provided on the lower surface of the interphase member 22B adjacent to the stator unit 21B.

The groove portion 22Ba is provided so as to connect between a circumferential and radial position where the lead wire LL_CT is drawn out on the stator core 210 of the stator unit 21C and a circumferential and radial position where the through-hole 210E of the stator core 210 of the stator unit 21C is provided. Thus, the lead wire LL_CT can be laid out between the coil 212 of the stator unit 21C and the through-hole 210E of the stator core 210 of the stator unit 21C through the groove portion 22Ba.

The lead wire LL_CT is arranged so as to pass through the through-hole 210E of the stator core 210 of the stator unit 21C and the through-hole 30H of the fixing member 30 in the axial direction in the order from the top. Thus, the lead wire LL_CT can be laid out so as to connect between the coil 212 of the stator unit 21C and the control device 40 through the through-hole 210E of the stator core 210 of the stator unit 21C and the through-hole 30H of the fixing member 30.

The same layout as that of the lead wire LL_CT may be adopted for the lead wire LL_CN extending from the coil 212 of the stator unit 21C. The stator cores 210 of the stator units 21A and 21B need not be provided with a through-hole 210E which is axially connected to a through-hole 210E of the stator core 210 of the stator unit 21C in which the lead wire LL_CT is arranged.

Further, as illustrated in FIG. 16, a tubular member 31 (an example of a pipe member) may be inserted into the through-hole 210E in which the lead wire LL is arranged to be fitted, and the lead wire LL may be arranged in a hollow portion inside the tubular member. As a result, the member 31 having a certain degree of rigidity may be inserted so as to communicate with the plurality of through-holes 210E which are axially connected to each other, so that the member 31 can be used for positioning in the circumferential direction between the axially stacked stator units 21 in the manufacturing process.

The member 31 may be fitted by inserting one end thereof into the through-hole 210E, and the other end thereof may be coupled with the fixing member 30. As a result, the member 31 can be used for positioning in the circumferential direction between the stator 20 (the stator units 21A to 21C) and the fixing member 30 in the manufacturing process.

The member 31 is made of, for example, an electrically insulating material. Thus, the electrical insulation between the lead wire LL and the stator core 210 can be ensured. The member 31 includes members 31A to 31C.

The member 31A is inserted into the through-hole 210E of stator core 210 of stator units 21A to 21C in which the lead wire LL_AT is arranged. Specifically, the member 31A is axially inserted into the through-holes 210E of the stator cores 210 of the stator units 21A to 21C and the through-hole 30H of the fixing member 30 between one end and the other end. Thus, the lead wire LL_AT can be laid out so as to electrically connect the coil 212 of the stator unit 21A and the control device 40 through a space inside the member 31A.

Further, the member 31A may be inserted into the through-hole 30H of the fixing member 30 to be fitted. Thus, the member 31A can be coupled to the fixing member 30.

A tubular member similar to the member 31A may also be inserted into the through-holes 210E of the stator cores 210 of the stator units 21A to 21C in which the lead wire LL_AN is arranged.

The member 31B is inserted into the through-holes 210E of the stator cores 210 of the stator units 21B and 21C in which the lead wire LL_BT is arranged. Specifically, the member 31B is axially inserted into the through-holes 210E of the stator cores 210 of the stator units 21B and 21C and the through-hole 30H of the fixing member 30 between one end and the other end. Thus, the lead wire LL_BT can be laid out so as to electrically connect the coil 212 of the stator unit 21B and the control device 40 through the space inside the member 31B.

Further, the member 31B may be inserted into the through-hole 30H of the fixing member 30 to be fitted. Thus, the member 31B can be coupled to the fixing member 30.

A tubular member similar to the member 31B may also be inserted into the through-holes 210E of the stator cores 210 of the stator units 21B and 21C in which the lead wire LL_BN is arranged.

The member 31C is inserted into the through-hole 210E of the stator core 210 of the stator unit 21C in which the lead wire LL_CT is arranged. Specifically, the member 31C is axially inserted into the through-hole 210E of the stator core 210 of the stator unit 21C and the through-hole 30H of the fixing member 30 between one end and the other end. Thus, the lead wire LL_CT can be laid out so as to electrically connect the coil 212 of the stator unit 21C and the control device 40 through the space inside the member 31C.

The member 31C may also be inserted into the through-hole 30H of the fixing member 30 to be fitted. Thus, the member 31C can be coupled to the fixing member 30.

A tubular member similar to the member 31C may also be inserted into the through-hole 210E of the stator core 210 of the stator unit 21C in which the lead wire LL_CN is arranged.

For example, as illustrated in FIG. 14, the control device 40 is provided below the fixing member 30, specifically, on the side opposite to the stator 20 in the axial direction as viewed from the fixing member 30. The control device 40 is fixed to the fixing member 30 via, for example, a mounting rubber for damping. Thus, the control device 40 can be integrated with the main parts of the claw pole motor 1 such as the rotor 10 and the stator 20. Further, because the rotor 10, the stator 20, the fixing member, and the control device 40 are arranged in the axial direction, the radial dimension can be maintained and the claw pole motor 1 can be prevented from becoming large in size.

In this example, the control device 40 includes a housing 41, a substrate 42, and a support member 43.

The housing 41 houses the elements of the control device 40. The housing 41 includes an accommodating portion 41A having an open end on the lower side, and a lid 41B closing the open end. Thus, a worker who performs manufacturing work or maintenance work after shipment of the claw pole motor 1 can access the inside of the housing 41 (the accommodating portion 41A) with the lid 41B removed.

The substrate 42 is provided substantially perpendicular to the axial direction, that is, substantially parallel to the radial direction and the circumferential direction, within the housing 41 (the accommodating portion 41A). For example, the substrate 42 is provided with the above-described rectifying circuit, smoothing circuit, inverter circuit, U-phase terminal TA, V-phase terminal TB, W-phase terminal TC, and neutral point terminal TNP. Further, for example, the U-phase terminal TA, V-phase terminal TB, W-phase terminal TC, and neutral point terminal TNP are provided on the lower surface of the substrate 42. Thus, the worker can access the U-phase terminal TA, V-phase terminal TB, W-phase terminal TC, and neutral point terminal TNP from the open end on the lower side of the accommodating portion 41A. Any known means may be applied to connect the external terminal (U-Phase terminal TA, V-Phase terminal TB, W-Phase terminal TC, and neutral terminal TNP) of the substrate 42 to the tip of the lead wire LL. For example, the external terminal of the substrate 42 and the lead wire LL may be connected by soldering, connectors, or the like.

The support member 43 is attached to the floor side (upper surface) of the interior of the housing 41 (the accommodating portion 41A), and the substrate 42 is attached to the tip (lower end) thereof, thereby fixing the substrate 42 to the housing 41 so as to support the substrate 42 inside the housing 41 from above.

For example, as illustrated in FIG. 14, a through-hole 41H penetrating between the inside (lower side) and the outside (upper side) of the housing 41 is provided in the floor portion (upper portion) of the accommodating portion 41A. Specifically, the through-hole 41H may be provided so as to partially or completely overlap with the through-hole 30H of the fixing member 30 when viewed along the axial direction. This allows the lead wire LL to pass through the through-hole 30H of the fixing member 30 and the through-hole 41H of the accommodating portion 41A in this order, so that the lead wire LL can be easily drawn into the control device 40 when the claw pole motor 1 is manufactured. Therefore, the assemblability of the claw pole motor 1 can be enhanced and the manufacturing efficiency can be improved.

Further, for example, as illustrated in FIG. 14, the substrate 42 is provided with a through-hole 42H which penetrates between both surfaces in the axial direction (vertical direction). Specifically, the through-hole 42H may be partially or entirely overlapped with the through-hole 30H of the fixing member 30 and the through-hole 41H of the accommodating portion 41A when viewed along the axial direction. Thus, when the claw pole motor 1 is manufactured, the lead wire LL is allowed to pass through the through-hole 30H of the fixing member 30, the through-hole 41H of the accommodating portion 41A, and the through-hole 42H of the substrate 42 in this order, and the lead wire LL can be easily guided to the surface of the substrate 42 where the connection destination (external terminal) of the lead wire LL is provided. Therefore, the assemblability of the claw pole motor 1 can be enhanced and the manufacturing efficiency can be improved.

For example, as illustrated in FIG. 14, the support member 43 is provided so as to overlap (preferably to cover) the through-hole 41H of the accommodating portion 41A and the through-hole 42H of the substrate 42 when viewed along the axial direction. The support member 43 may be provided with a through-hole 43H penetrating in the axial direction (vertical direction) and overlapping the through-hole 41H of the accommodating portion 41A and the through-hole 42H of the substrate 42 when viewed along the axial direction. For example, the support member 43 may be a cylindrical member provided so as to cover the through-hole 41H and the through-hole 42H when viewed along the axial direction and having substantially the same inner diameter as the through-hole 42H and the through-hole 42H. Thus, the through-hole 41H of the accommodating portion 41A and the through-hole 42H of the substrate 42 can be continuously communicated with the lead wire LL through the through-hole 43H of the support member 43. For this reason, when the claw pole motor 1 is manufactured, the lead wire LL can be easily passed in the range from the through-hole 41H to the through-hole 42H, and as a result, the assemblability of the claw pole motor 1 can be further improved and the manufacturing efficiency can be further improved.

The control device 40 may include other elements such as a rotor position detection circuit (Hall sensor, etc.). Further, the functions of the control device 40 may be divided into two or more control devices. For example, the function of the substrate 42 may be divided into two or more substrates. In this case, the lead wire LL may be connected to any one of two or more divided control devices (substrates).

<Second example>

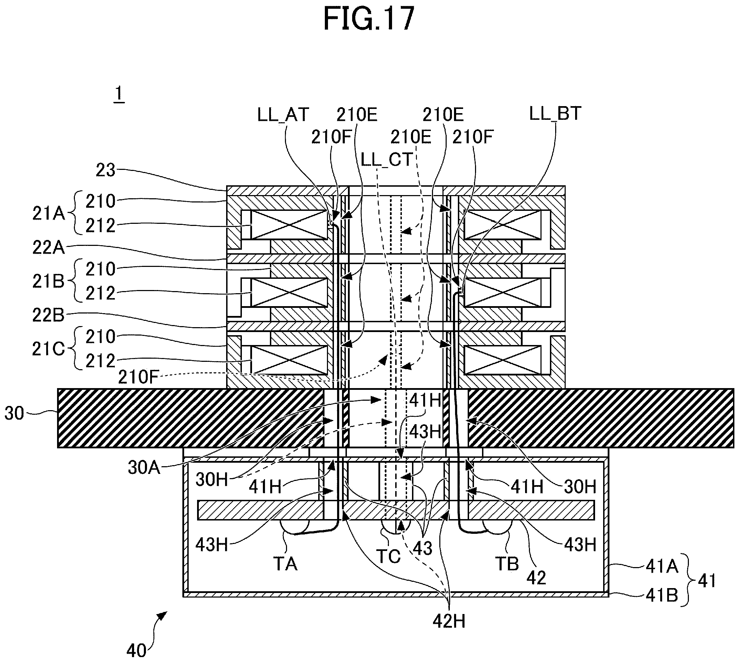

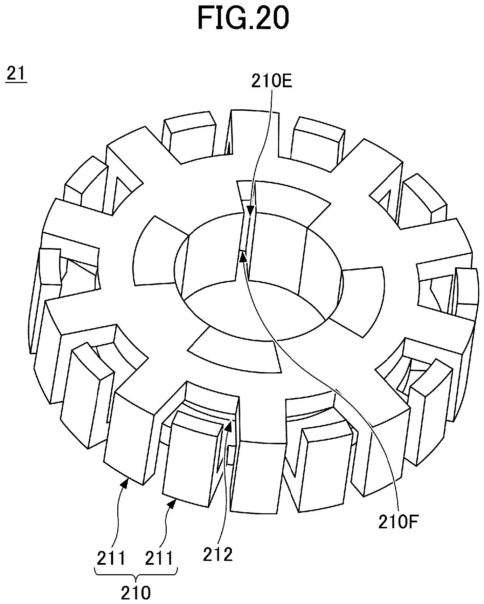

FIG. 17 is a vertical sectional view schematically illustrating a second example of the layout of the lead wires LL of the coil 212 in the claw pole motor 1. FIG. 18 is a vertical sectional view illustrating an example of the guiding path 210F of the lead wire LL between the coil 212 and the through-hole 210E of the stator core 210. FIG. 19 is a perspective view illustrating another example of the guiding path 210F of the lead wire LL between the coil 212 and the through-hole 210E of the stator core 210. FIG. 20 is a perspective view illustrating yet another example of the guiding path 210F of the lead wire LL between the coil 212 and the through-hole 210E of the stator core 210.

Hereinafter, the layout of the lead wire LL will be described focusing mainly on a portion different from that of the first example, and the description of the same or corresponding content of the first example may be omitted.

As illustrated in FIG. 17, the yoke portion 210C of the stator core 210 is provided with a through-hole 210E similar to that of the first example.

Further, in this example, the yoke portion 210C of the stator core 210 is provided with a guiding path 210F connecting the outer peripheral surface of the yoke portion 210C and the through-hole 210E. Thus, the lead wire LL can be laid out through the guiding path 210F between the space radially outside the yoke portion 210C in which the coil 212 is arranged and the through-hole 210E axially provided in the yoke portion 210C.

The guiding path 210F may be provided for each through-hole 210E of the stator core 210, or may be provided only for the through-hole 210E in which the lead wire LL extending from the coil 212 accommodated in the stator core 210 needs to be drawn.

For example, as illustrated in FIG. 17, the guiding path 210F is a through-hole penetrating in the radial direction between the outer peripheral surface of the yoke portion 210C and the through-hole 210E.

For example, as illustrated in FIG. 18, in the case where the pair of stator cores 211 are axially divided by the yoke portion 210C (see FIGS. 9 and 10), the guiding path 210F may be formed by the groove portions 211F provided in the pair of stator cores 211.

The groove portions 211F are provided so as to connect between the outer peripheral surface in the radial direction and the opening of the through-hole 211E on the tip surface in the axial direction of the yoke portion 211C. Thus, the axial end surfaces of the yoke portions 211C of the pair of stator cores 211 are coupled to each other, so that the axial openings of the groove portions 211F of the pair of stator cores 211 overlap to form a guiding path 210F as a radially extending through-hole in the stator core 210.

Further, the guiding path 210F serving as a through-hole penetrating in the radial direction between the outer peripheral surface of the yoke portion 210C and the through-hole 210E may be provided in one of the yoke portions 211C, divided in the axial direction, of the pair of stator cores 211. In this case, the guiding path 210F is provided at a position away from the mating surface of the pair of stator cores 211 in the axial direction.

Further, the guiding path 210F serving as a through-hole penetrating in the radial direction between the outer peripheral surface of the yoke portion 210C and the through-hole 210E may be provided in one of the yoke portions 211C (see FIGS. 9 and 10), divided in the circumferential and radial directions, of the pair of stator cores 211. Specifically, the guiding path 210F as a through-hole penetrating in the radial direction between the outer peripheral surface of the yoke portion 210C and the through-hole 210E may be provided in the yoke portion 211C provided with the through-hole 210E.

As illustrated in FIG. 19, the guiding paths 210F are notched portions (an example of a gap) in which the radial outside of the through-holes 210E of the yoke portions 211C, divided in the circumferential and radial directions, of the pair of stator cores 211 are notched up to the outer peripheral surface of the yoke portions 211C and the mating surface in the radial direction.

As illustrated in FIG. 20, the guiding path 210F may be notched portions notched not only to the radially outer side of the through-holes 210E of the yoke portions 211C, divided in the circumferential and radial directions, of the pair of stator cores 211 but also to the inner peripheral surface of the yoke portion 211C on the inner side.

<Third example>

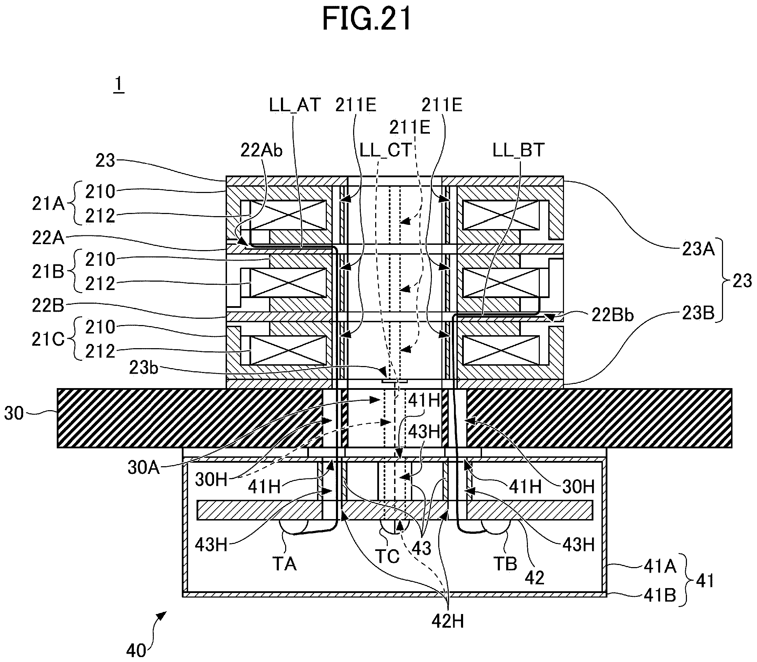

FIG. 21 is a longitudinal sectional view schematically illustrating a third example of the layout of the lead wires LL of the coil 212 in the claw pole motor 1.

Hereinafter, the layout of the lead wires LL will be described mainly on portions different from those of the first and second examples, and the description of the same or corresponding contents as the first and second examples may be omitted.

As illustrated in FIG. 21, the lead wire LL_AT is arranged to pass through a gap between claw magnetic poles 211B adjacent in the circumferential direction of the lower stator core 211 and to be drawn from the coil 212 of the stator unit 21A to the bottom of the stator core 210.

A groove portion 22Ab is provided on the upper surface of the interphase member 22A adjacent to the stator unit 21.

The groove portion 22Ab is provided so as to connect a circumferential and radial position where the lead wire LL_AT is drawn out under the stator core 210 of the stator unit 21A and a circumferential and radial position where the through-hole 210E of the stator core 210 of the stator unit 21B is provided. Thus, the lead wire LL_AT can be laid out between the coil 212 of the stator unit 21A and the through-hole 210E of the stator core 210 of the stator unit 21B through the groove portion 22Ab.

The lead wire LL_AT is arranged so as to pass through the through-holes 210E of the stator cores 210 of the stator unit 21B and the stator unit 21C and the through-hole 30H of the fixing member 30 in the axial direction in the order from the top. Thus, the lead wire LL_AT can be laid out so as to connect the coil 212 of the stator unit 21A and the control device 40 through the through-holes 210E of the stator cores 210 of the stator units 21B and 21C and the through-hole 30H of the fixing member 30.

The same layout as that of the lead wire LL_AT may be adopted for the lead wire LL_AN extending from the coil 212 of the stator unit 21A. The stator core 210 of the stator unit 21A need not be provided with the through-hole 211E.

The lead wire LL_BT is arranged to pass through a gap between the claw magnetic poles 211B adjacent to each other in the circumferential direction of the lower stator core 211, and to be drawn from the coil 212 of the stator unit 21B to the bottom of the stator core 210.

Groove portions 22Bb are provided on the upper surface of the interphase member 22B adjacent to the stator unit 21.

The groove portions 22Bb are arranged to connect the position in the circumferential direction and the radial direction where the lead wire LL_BT is drawn under the stator core 210 of the stator unit 21B and the position in the circumferential direction and the radial direction where the through-hole 210E of the stator core 210 of the stator unit 21C is provided. Thus, the lead wire LL_BT can be laid out between the coil 212 of the stator unit 21B and the through-hole 210E of the stator core 210 of the stator unit 21C through the groove portion 22Bb.

The lead wire LL_BT is arranged to pass through the through-hole 210E of the stator core 210 of the stator unit 21C and the through-hole 30H of the fixing member 30 in the axial direction in the order from the top. Thus, the lead wire LL_BT can be laid out so as to connect the coil 212 of the stator unit 21B and the control device 40 through the through-hole 210E of the stator core 210 of the stator unit 21C and the through-hole 30H of the fixing member 30.

The lead wire LL_BN extending from the coil 212 of the stator unit 21B may have the same layout as that of the lead wire LL_BT. Further, the stator cores 210 of the stator units 21A and 21B need not be provided with a through-hole 210E axially connected to the through-hole 210E of the stator core 210 of the stator unit 21C in which the lead wire LL_BT is arranged.

The lead wire LL_CT is arranged so as to pass through a gap in the circumferential direction between the claw magnetic poles 211B adjacent in the circumferential direction of the lower stator core 211 and be drawn from the coil 212 of the stator unit 21B to the bottom of the stator core 210.

A groove portion 23b is provided on the upper surface of the end member 23B adjacent to the stator unit 21C.

The groove portion 23b is provided so as to connect a position in the circumferential direction and the radial direction where the lead wire LL_CT is drawn under the stator core 210 of the stator unit 21C and a position in the circumferential direction and the radial direction where the through-hole 30H is provided. Thus, the lead wire LL_CT can be laid out between the coil 212 of the stator unit 21B and the through-hole 30H of the fixing member 30 through the groove portion 23b.

The lead wire LL_CT is arranged to pass through the through-hole 30H of the fixing member 30 in the axial direction. Thus, the lead wire LL_CT can be laid out so as to connect between the coil 212 of the stator unit 21C and the control device 40 through the through-hole 30H of the fixing member 30.

The same layout as that of the lead wire LL_CT may be adopted for the lead wire LL_CN extending from the coil 212 of the stator unit 21C. The stator cores 210 of the stator units 21A to 21C need not be provided with the through-hole 210E axially connected to the through-hole 30H in which the lead wire LL_CT is arranged.

[Arrangement of through-holes in circumferential direction]

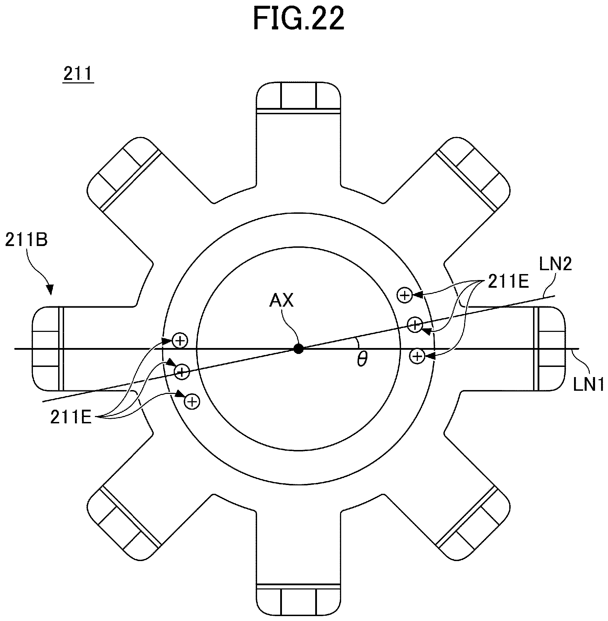

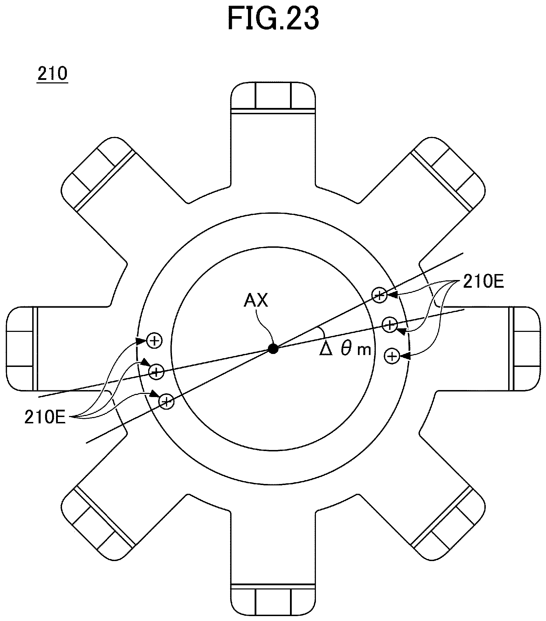

Next, the circumferential arrangement of the through-hole 210E (the through-holes 211E) of the stator core 210 (the stator core 211) will be described with reference to FIGS. 22 and 23 in addition to FIGS. 1 to 21.

<First example>

FIG. 22 is a diagram illustrating an example of the arrangement of the through-holes 211E of the stator core 211. More specifically, the diagram illustrates a specific example of the arrangement of the through-holes 211E in which a pair of stator cores 211 divided in the axial direction by the yoke portion 210C can be shared.

For example, when viewed along the axial direction, the through-holes 211E are provided at a position (straight line LN2) offset by an angle θm [°], defined by the following equation (2), from a position (straight line LN1) in the circumferential direction of the claw magnetic pole 211B.

$$\Theta m = 360/Pn/2 \quad \ldots(2)$$

Pn is the number of poles of the claw pole motor 1.

The number of poles P is twice the number of claw magnetic poles arranged in the circumferential direction of the stator core 211. Therefore, equation (2) means an angular position shifted from one reference claw magnetic pole 211B of the stator core 211 by 1/4 of the circumferential distance between the claw magnetic poles 211B from the reference claw magnetic pole 211B.

In this example (FIG. 22), because the stator core 211 has eight claw magnetic poles 211B, the number of poles Pn is 16 (Pn = 16), which is twice the number of poles. Therefore, the angle θm is 11.25 [°].

Thus, when combined as the stator unit 21, it is possible to align the circumferential positions of both through-holes 211E of the pair of stator cores 211 and allow both through-holes 211E to pass through in the axial direction as the through-holes 210E. Therefore, the stator unit 21 can be configured by using the pair of stator cores 211 in common and combining two of the same stator cores 211.

The through-holes 210E may be arranged at two mutually symmetrical angular positions based on the angular position (straight line LN1) in the circumferential direction corresponding to the angle θm.

Thus, when combined as the stator unit 21, the two through-holes 211E on each side of the pair of stator cores 211 can be positioned in the circumferential direction so that these sets of two through-holes 211E on respective sides can pass through in the axial direction as the two through-holes 210E. Therefore, the stator unit 21 can be configured by using the pair of stator cores 211 in common and combining two of the same stator cores 211.

In this example (FIG. 22), the stator core 211 is provided with the through-holes 211E at two angular positions on the straight line LN1. Further, in this example, the stator core 211 is provided with the through-holes 211E at a total of four angular positions, which are the two angular positions symmetrical with respect to one angular position on the straight line LN1 and the two angular positions symmetrical with respect to another angular position on the straight line LN1. Thus, for example, a total of six through-holes 211E capable of disposing six different lead wires LL can be provided in the stator core 211.

In the case of a structure in which a pair of stator cores 211 are divided in the circumferential direction and the radial direction by the yoke portions 210C, the through-holes 210E are provided to penetrate both end portions of the yoke portions 211C of both stator cores 211 as described above. Therefore, for example, by providing three through-holes 210E in the yoke portion 211C of the stator core 211, a stator core 210 having six through-holes 210E can be realized by combining the same two stator cores 211.

<Second example>

FIG. 23 is a diagram illustrating an example of the arrangement of the through-holes 210E of the stator core 210. More specifically, the diagram illustrates a specific example of the arrangement of the through-holes 210E in which the stator units 21 that are adjacent in the axial direction and whose positions in the circumferential direction are shifted by an electric angle θe can share the stator core 210.

For example, when viewed along the axial direction, a plurality of the through-holes 210E are arranged in the circumferential direction at an interval (angle) Δθe [°] defined by the following equation (3) when expressed by an electric angle.

$$\Delta\Theta e \ = \ \theta + 360 \times N \quad \ldots (3)$$

N is an integer equal to or greater than 0.

A plurality of through-holes 210E are arranged in the circumferential direction at intervals Δθm [°] defined by the following equation (4) when expressed by machine angles.

$$\Delta\Theta m \ = \ \Delta\Theta e / (Pn/2)$$
$$= \ 360/M/(Pn/2) + 360/(Pn/2) \times N \quad \ldots (4)$$

For example, as illustrated in FIG. 23, because the number of poles Pn is 16, the stator cores 211 are arranged at intervals of an electric angle θe (= 120°), that is, a machine angle of 15° when N = 0.

Thus, when the stator cores 210 of two adjacent stator units 21 of different phases are arranged so as to be circumferentially displaced by an electric angle θe, the positions of the through-holes 210E of both stator cores 210 in the circumferential direction can be aligned using the same stator core 210. Therefore, the stator cores 210 can be shared between two stator units 21 of different phases adjacent in the axial direction. Therefore, when the stator core 210 is provided with three or more through-holes 210E at intervals of an electric angle Δθe, the through-holes 210E axially connected (communicating) between the stator units 21A to 21C can be realized using the same stator cores 210.

[Another embodiment]

Next, another embodiment will be described.

The above-described embodiments may be appropriately combined, modified, or changed.

For example, the layout of the lead wire LL of the coil 212 for each of the stator units 21A to 21C may be arbitrarily selected from the layouts of the above-described first to third examples (FIG. 14, FIG. 17, FIG. 21) and combined.

The position of the through-hole 210E of the stator core 210 in the circumferential direction may be set so as to satisfy both the conditions of the first and second examples.

The through-hole 210E may be provided in the yoke portion 210A at both ends in the axial direction of the stator core 210 in place of the yoke portion 210C, and may be arranged so that the lead wire LL is connected between the coil 212 and the control device 40 through the yoke portion 210A.

[Application example of claw pole motor]

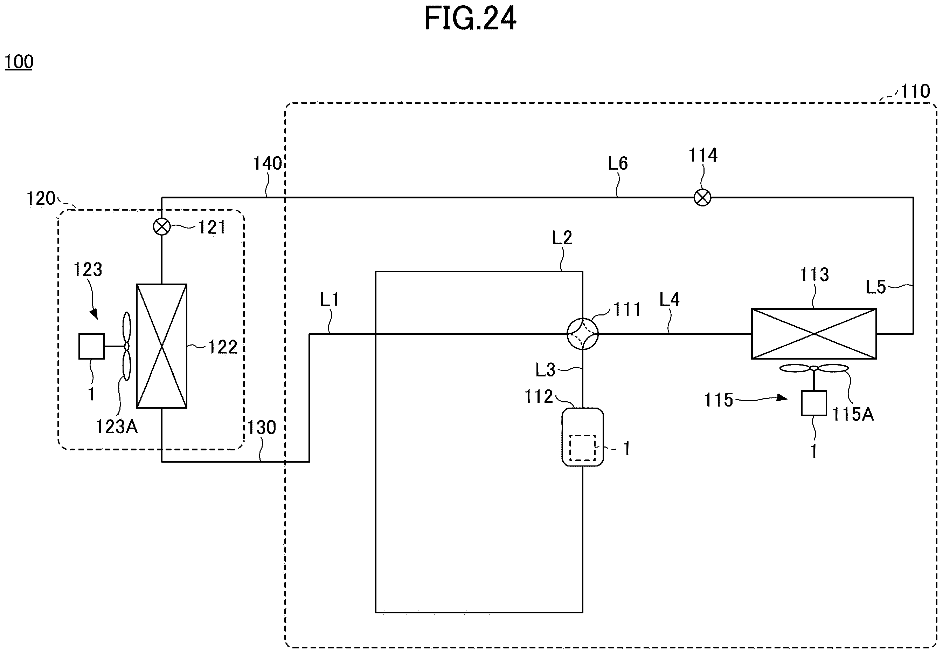

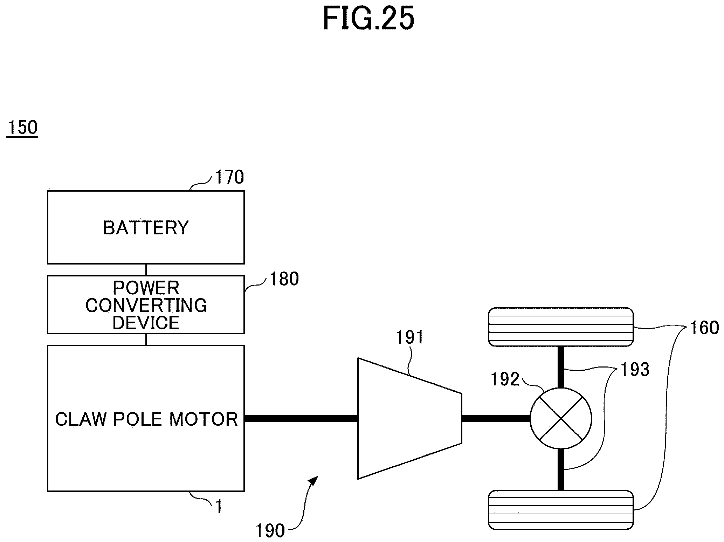

Next, a specific application example of the claw pole motor 1 according to the present embodiment will be described with reference to FIGS. 24 and 25.

<First application example>

FIG. 24 is a diagram illustrating an example of an air conditioner 100 on which the claw pole motor 1 according to the present embodiment is mounted.

The air conditioner 100 (an example of a refrigeration apparatus) includes an outdoor unit 110, an indoor unit 120, and a refrigerant path 130 and 140. The air conditioner 100 operates a refrigerant circuit composed of the outdoor unit 110, the indoor unit 120, the refrigerant path 130 and 140, and the like, and adjusts the temperature, humidity, and the like in the room where the indoor unit 120 is installed.

The outdoor unit 110 is arranged outside a building in which temperature and the like are to be adjusted. The outdoor unit 110 is connected to one end of each refrigerant path 130 and 140, takes in the refrigerant from one of the refrigerant paths 130 and 140, and discharges the refrigerant to the other.

The indoor unit 120 is arranged inside a building in which the temperature and the like are to be adjusted. The indoor unit 120 is connected to the other end of each refrigerant path 130 and 140, takes in the refrigerant from one of the refrigerant paths 130 and 140, and discharges the refrigerant to the other.

The refrigerant paths 130 and 140 are configured, for example, by a pipe line, and connect between the outdoor unit 110 and the indoor unit 120 so that refrigerant can be circulated between the outdoor unit 110 and the indoor unit 120.

The outdoor unit 110 includes refrigerant paths L1 to L6, a four-way selector valve 111, a compressor 112, an outdoor heat exchanger 113, an outdoor expansion valve 114, and a fan 115.

The refrigerant paths L1 to L6 are configured, for example, as a pipe line.

The refrigerant path L1 connects one end of the refrigerant path 130 outside to the outdoor unit 110 and the four-way selector valve 111.

The refrigerant path L2 connects the four-way selector valve 111 and the inlet of the compressor 112.

The refrigerant path L3 connects the four-way selector valve 111 and the outlet of the compressor 112.

The refrigerant path L4 connects the four-way selector valve 111 and the outdoor heat exchanger 113.

The refrigerant path L5 connects the outdoor heat exchanger 113 and the outdoor expansion valve 114.

The refrigerant path L6 connects one end of the refrigerant path 140 outside the outdoor unit 110 and the outdoor expansion valve 114.

The four-way selector valve 111 reverses the flow of refrigerant being circulated, between a case of the cooling operation and the case of a heating operation of the air conditioner 100.

During the cooling operation of the air conditioner 100, the four-way selector valve 111 connects the paths indicated by the solid lines in FIG. 44. Specifically, during the cooling operation of the air conditioner 100, the four-way selector valve 111 connects the refrigerant path L1 and the refrigerant path L2, and connects the refrigerant path L3 and the refrigerant path L4.

On the other hand, during the heating operation of the air conditioner 100, the four-way selector valve 111 connects the paths indicated by the dotted lines in FIG. 44. Specifically, during the heating operation of the air conditioner 100, the four-way selector valve 111 connects the refrigerant path L4 and the refrigerant path L2, and connects the refrigerant path L1 and the refrigerant path L3.

The compressor 112 sucks the refrigerant from the refrigerant path L2, compresses the refrigerant to a high pressure, and discharges the refrigerant to the refrigerant path L3. The compressor 112 is equipped with (incorporates) the claw pole motor 1, and is electrically driven by the claw pole motor 1.

During the cooling operation of the air conditioner 100, the high-temperature, high-pressure refrigerant compressed by the compressor 112 flows into the outdoor heat exchanger 113 through the refrigerant path L3 and the refrigerant path L4.

On the other hand, during the heating operation of the air conditioner 100, the high-temperature and high-pressure refrigerant compressed by the compressor 112 flows out to the refrigerant path 130 outside the outdoor unit 110 through the refrigerant path L3 and the refrigerant path L1. The high-temperature and high-pressure refrigerant flows into the indoor unit 120 through the refrigerant path 130.

The outdoor heat exchanger 113 exchanges heat between the outside air and the refrigerant passing through the inside. Specifically, the outdoor heat exchanger 113 is provided with a fan 115, and the outdoor heat exchanger 113 exchanges heat between the outside air blown by the fan 115 and the refrigerant passing through the inside.

During the cooling operation of the air conditioner 100, the outdoor heat exchanger 113 causes the high-temperature and high-pressure refrigerant flowing through the refrigerant path L4 and compressed by the compressor 112 to radiate heat to the outside air, and causes the condensed and liquefied refrigerant (liquid refrigerant) to flow out to the refrigerant path L5.

During the heating operation of the air conditioner 100, the outdoor heat exchanger 113 causes the low-temperature and low-pressure liquid refrigerant flowing through the refrigerant path L5 to absorb heat from the outside air, and causes the evaporated refrigerant to flow out to the refrigerant path L4.

The outdoor expansion valve 114 is closed to a predetermined opening amount during the heating operation of the air conditioner 100, and reduces the pressure of the refrigerant (liquid refrigerant) flowing in from the refrigerant path L6 to a predetermined pressure. On the other hand, the outdoor expansion valve 114 is fully opened during the cooling operation of the air conditioner 100, and allows the refrigerant (liquid refrigerant) to pass from the refrigerant path L5 to the refrigerant path L6.

As described above, the fan 115 (an example of a fan) blows air to the outdoor heat exchanger 113, and promotes heat exchange in the outdoor heat exchanger 113. The fan 115 is mounted with a claw pole motor 1, and is electrically driven by the claw pole motor 1.

The indoor unit 120 includes an indoor expansion valve 121, an indoor heat exchanger 122, and a fan 123.

The indoor expansion valve 121 is closed to a predetermined opening amount during the cooling operation of the air conditioner 100, and reduces the pressure of the supercooled liquid refrigerant flowing from the refrigerant path 140 to a predetermined pressure. On the other hand, the indoor expansion valve 121 is fully opened during the heating operation of the air conditioner 100, and allows the refrigerant (liquid refrigerant) flowing out from the indoor heat exchanger 122 to pass toward the refrigerant path 140.

The indoor heat exchanger 122 exchanges heat between the indoor air and the refrigerant passing through the interior. Specifically, by the function of the fan 123 mounted on the indoor unit 120, the indoor air is caused to pass around the indoor heat exchanger 122, and the indoor air having undergone heat exchange with the refrigerant inside the indoor heat exchanger 122 is blown out to the outside of the indoor unit 120, thereby cooling or heating the indoor area.

Specifically, during the cooling operation of the air conditioner 100, the indoor heat exchanger 122 causes the low-temperature, low-pressure liquid refrigerant reduced in pressure by the indoor expansion valve 121 to absorb heat from the indoor air, thereby lowering the temperature of the indoor air.

On the other hand, during the heating operation of the air conditioner 100, the indoor heat exchanger 122 causes the high-temperature, high-pressure refrigerant flowing from the outdoor unit 110 through the refrigerant path 130 to radiate heat to the indoor air, thereby raising the temperature of the indoor air.

As described above, the fan 123 (an example of a fan) blows air to the indoor heat exchanger 122, and blows the indoor air having undergone heat exchange with the refrigerant inside the indoor heat exchanger 122 out to the outside of the indoor unit 120. The fan 123 is provided with the claw pole motor 1 and is electrically driven by the claw pole motor 1.

The claw pole motor 1 may be mounted on part of, that is, one or two of the compressor 112, the fan 115, and the fan 123.

As described above, the claw pole motor 1 according to the present embodiment can be applied to the compressor 112, the fan 115, and the fan 123 mounted on the air conditioner 100.

The claw pole motor 1 may be applied to a refrigeration apparatus other than the air conditioner 100.

<Second application example>

FIG. 25 is a diagram illustrating an example of the vehicle 150.

The vehicle 150 is an electric vehicle and includes a claw pole motor 1, drive wheels 160, a battery 170, a power converting device 180, and a power transmission mechanism 190.

For example, the vehicle 150 is a BEV (Battery Electric Vehicle). The vehicle 150 may also be an HEV (Hybrid Electric Vehicle), a PHEV (Plug-in Hybrid Electric Vehicle), or a range extender EV.

The claw pole motor 1 is the prime mover of the vehicle 150. The claw pole motor 1 drives the drive wheels 160 through the power transmission mechanism 190 to drive the vehicle 150.

The drive wheels 160 are driven by the power transmitted through the power transmission mechanism 190 as described above. The drive wheels 160 may be front wheels, rear wheels, or both.

The battery 170 has an output voltage of several hundred volts, for example, and supplies electric energy to the claw pole motor 1 through the power converting device 180. The battery 170 is, for example, a lithium ion battery.

A DC (Direct Current)-DC converter for boosting or lowering the output voltage of the battery 170 may be provided between the battery 170 and the power converting device 180.

The power converting device 180 converts the DC voltage of the battery 170 into a three-phase AC voltage and supplies the three-phase AC voltage to the claw pole motor 1. The power converting device 180 converts the regenerative energy of the three-phase AC voltage of the claw pole motor 1 during deceleration of the vehicle 150 into a DC voltage and charges the battery 170.

The power transmission mechanism 190 transmits the output of the claw pole motor 1 to the drive wheels 160. The power transmission mechanism 190 includes a reduction gear 191, a differential 192, and a drive shaft 193.

For example, as in the case of an in-wheel motor, the claw pole motor 1 may be provided for each of the left and right drive wheels 160. In this case, the power transmission mechanism 190 may be provided for each of the left and right drive wheels 160, the differential 192 may be omitted, and the drive shaft 193 may be omitted.

The reduction gear 191 is connected to one end of the output shaft of the claw pole motor 1, and reduces the power of the output shaft of the claw pole motor 1 at a predetermined reduction ratio to output the power.

The reduction gear 191 may be omitted.

The differential 192 transmits the output of the reduction gear 191 to the right and left drive wheels 160 through the right and left drive shafts 193, and absorbs the difference in speed when the right and left drive wheels 160 turn.

The drive shaft 193 connects the differential 192 and the right and left drive wheels 160, and transmits the power output from the differential 192 to the right and left drive wheels 160.

The claw pole motor 1 may be mounted on the vehicle 150 for purposes other than acting as the prime mover of the vehicle 150. For example, the claw pole motor 1 is mounted on the compressor of the air conditioner (air conditioner) of the vehicle 150.

Thus, the claw pole motor 1 according to the present embodiment can be applied to the vehicle 150.

[Functions]

Next, the functions of the claw pole motor 1 according to the present embodiment will be described.

In the present embodiment, the claw pole motor 1 includes the rotor 10, the stator 20, and the lead wire LL. Specifically, the rotor 10 is configured to be rotatable around the rotation axis AX. The stator 20 includes an annularly wound coil 212 and a claw pole-type stator core 210 provided so as to surround the coil 212. The lead wire LL extends from the coil 212. The stator core 210 is provided with the rotation axis AX as the center thereof and has a through-hole 210D penetrating in the axial direction and a through-hole 210E penetrating in the axial direction in which the lead wire LL is arranged.

Thus, the lead wire LL extending from the coil 212 can be arranged in the through-hole 210E. Therefore, for example, it is possible to prevent a situation in which the lead wire LL is close to or possibly in contact with a rotating portion such as the rotor 10 outside the stator 20 in the radial direction or the rotation shaft member 13 inside the stator 20 in the radial direction. Thus, a more appropriate layout of the lead wire LL can be realized.

In the present embodiment, the stator 20 may include a first stator unit (e.g., the stator unit 21A) including the coil 212 and the stator core 210, and a second stator unit (e.g., the stator unit 21B) including the coil 212 and the stator core 210. The first stator unit and the second stator unit may be axially stacked.

Thus, when the first stator unit and the second stator unit are axially stacked, for example, the lead wire LL from one of the coils 212 can be axially laid out through both through-holes 210E.

In the present embodiment, the through-hole 210E of the first stator unit and the through-hole 210E of the second stator unit may be connected when viewed from the axial direction.

Thus, the lead wire LL can be axially laid out through both through-holes 210E of the first stator unit and the second stator unit.

Further, in the present embodiment, the stator 20 may include three or more stator units 21 (e.g., the stator units 21A to 21C) axially stacked, including the first stator unit and the second stator unit. The through-holes 210E of all the stator units 21 may be connected when viewed in the axial direction.

Thus, when three or more stator units 21 are axially stacked, the lead wire LL from the coil 212 of one stator unit 21 can be axially laid out through the through-holes 210E of three or more stator units 21.

Further, in the present embodiment, the claw pole motor 1 may include a tubular member 31 fitted into the through-holes 310E of the first stator unit and the second stator unit so as to penetrate in the axial direction. The lead wire LL may be arranged in the member 31.

Thus, for example, in a manufacturing process, circumferential positioning between the first stator unit and the second stator unit can be achieved by the member 31. Moreover, for example, the member 31 can be used to ensure electrical insulation between the lead wire LL and the stator core 211 inside the through-hole 210E.

Further, in the present embodiment, the claw pole motor 1 may include a fixing member 30 for holding the stator 20 at one end in the axial direction. One end of the member 31 may be connected to the fixing member 30.

Thus, for example, the first stator unit and the second stator unit can be positioned relative to the fixing member 30 in the manufacturing process.

Further, in the present embodiment, the stator cores 210 of the first stator unit and the second stator unit may have the same shape.

Thus, the stator cores 210 can be shared between the first stator unit and the second stator unit stacked in the axial direction.

Further, in the present embodiment, the stator core 210 may include a yoke portion 210C covering the inner or outer side in the radial direction of the coil 212, a yoke portion 211A covering both ends in the axial direction of the coil wire, and claw magnetic poles 211B provided at equal intervals in the circumferential direction on the outer periphery or inner periphery of the yoke portion 211A. The claw magnetic poles 211B of the yoke portion 211A at one end in the axial direction and the claw magnetic poles 211B of the yoke portion 211A at the other end in the axial direction may be arranged alternately in the circumferential direction. The first stator unit and the second stator unit may be arranged so that the positions of the claw magnetic poles 211B are the same in the circumferential direction.

Thus, the positions of the through-holes 210E in the circumferential direction are aligned between the first stator unit and the second stator unit, and both through-holes 210E communicated in the axial direction, and the stator core 210 can be shared.

In the present embodiment, the first stator unit and the second stator unit may be arranged so that the positions in the circumferential direction are shifted by a predetermined angle θe [°] in terms of an electric angle. The first stator unit may have a predetermined number, which is two or more, of through-holes 210E. The second stator unit may have the same predetermined number of through-holes 210E as the first stator unit. The interval Δθe in the circumferential direction between the predetermined number of through-holes 210E of the first stator unit may be (θ+360×N) [°] (N is an integer greater than or equal to 0) in terms of an electric angle. The interval Δθe in the circumferential direction between the predetermined number of through-holes 210E of the second stator unit may be (θ+360×N) [°] (N is an integer greater than or equal to 0) in terms of an electric angle.

Thus, the positions of the through-holes 210E in the circumferential direction can be aligned between the first stator unit and the second stator unit, and the stator core 210 can be shared while both through-holes 210E are in axial communicated.

In the present embodiment, the claw pole motor 1 may be driven by AC power (armature current) of the phase number M (M is an integer greater than or equal to 2). The angle θe expressed by the electric angle may be equal to 360/M [°].

Thus, in the claw pole motor 1 driven by AC power of the phase number M, the stator cores 210 can be shared between the first stator unit and the second stator unit while both the through-holes 210E are in axial communication.

Further, in the present embodiment, the stator core 210 may include the yoke portion 210C covering the inner or outer side in the radial direction of the coil 212, the yoke portion 211A covering both ends in the axial direction of the coil 212, and the claw magnetic poles 211B provided on the outer periphery of the yoke portion 211A at equal intervals in the circumferential direction. The claw magnetic poles 211B of the yoke portion 211A at one end in the axial direction and the claw magnetic poles 211B of the yoke portion 211A at the other end in the axial direction may be arranged alternately in the circumferential direction. The stator core 210 may also include a first stator core and a second stator core (for example, a pair of stator cores 211) divided in the axial direction by the yoke portion 210C. The first stator core and the second stator core may also have the through-holes 210E (the through-holes 211E). Further, the through-holes 211E of the first stator core may be provided at angular positions moved by 1/4 of the interval between the adjacent claw magnetic poles 211B serving as the same pole with reference to the angular position at which the one claw magnetic pole 211B is arranged, or at two angular positions symmetrical to each other with reference to the first angular position. The through-holes 211E of the second stator core may be provided at an angular position moved by 1/4 of the interval between the adjacent claw magnetic poles 211B serving as the same pole with reference to the angular position at which the one claw magnetic pole 211B is arranged, or at two angular positions symmetrical to each other with reference to the first angular position.

Thus, for the first stator core and the second stator core divided in the axial direction by the yoke portion 210C, the positions in the circumferential direction of the through-holes 211E when they are combined can be aligned and the components can be shared while communicating with each other in the axial direction.

In the present embodiment, the stator core 210 may include the yoke portion 210C covering the inner or outer side in the radial direction of the coil 212 and the yoke portion 211A covering both end portions in the axial direction of the coil 212. The stator core 210 may be divided into a first stator core (for example, one stator core 211 of the pair of stator cores 211) including a yoke portion 211A covering one end in the axial direction of the coil 212 and a portion (the yoke portion 211C) in the circumferential direction of the yoke portion 210C, and a second stator core (for example, the other stator core 211 of the pair of the stator cores 211) including a yoke portion 211A covering the other end in the axial direction of the coil 212 and a remaining portion (the yoke portion 211C) in the circumferential direction of the yoke portion 210C.

Thus, a through-hole 210E can be provided in the yoke portions 211C of each of the first and second stator cores. Therefore, the same shape can be realized for the first and second stator cores, and components can be shared.

In the present embodiment, a gap (e.g., the guiding path 210F) connected to the second through-hole may be provided between adjacent surfaces in the circumferential direction of the first yoke portions of the first and second cores. The lead wire LL may be arranged in the through-hole 210E through the gap.

Thus, the lead wire LL extending from the coil 212 can be drawn into the through-hole 210E without being drawn outside the claw pole-type stator core 210.

Although the embodiments have been described above, it will be understood that various changes in form and details are possible without departing from the scope of the claims.

Finally, the present international application is based upon and claims priority to Japanese patent application no. 2022-057308 filed on March 30, 2022, the entire contents of which are incorporated herein by reference.

REFERENCE SIGNS LIST

1 claw pole motor
10 rotor
11 rotor core
12 permanent magnet
13 rotation shaft member
14 coupling member
20 stator
21 stator unit
21A to 21C stator unit
22 interphase member
22A interphase member
22Aa, 22Ab groove portion
22B interphase member
22Ba, 22Bb groove portion
23 end member
23a, 23b groove portion
23A, 23B end member
24 support member
24A insertion portion
24B enlarged diameter portion
24H hole portion
25, 26 bearing
27 fixing member
28 bolt
30 fixing member
30A hole portion
30H through-hole
31 member
31A to 31C member
40 control device
41 housing
41A accommodating portion
41B lid
41H through-hole
42 substrate
42H through-hole
43 support member
43H through-hole
100 air conditioner
110 outdoor unit

111 four-way selector valve
112 compressor
113 outdoor heat exchanger
114 outdoor expansion valve
115 fan
120 indoor unit
121 indoor expansion valve
122 indoor heat exchanger
123 fan
130 refrigerant path
140 refrigerant path
150 vehicle
160 drive wheel
170 battery
180 power converting device
190 power transmission mechanism
191 reduction gear
192 differential
193 drive shaft
210 stator core
210A yoke portion
210C yoke portion
210D through-hole
210E (communicating) through-hole
210E through-hole
210F guiding path
211 stator core
211A yoke portion
211A1 yoke portion
211A2 yoke portion
211B claw magnetic pole
211B1 claw magnetic pole portion
211B2 claw magnetic pole portion
211C yoke portion
211D hole portion
211E through-hole
211F groove portion
212 coil
310E through-hole
AX rotation axis
L1 to L6 refrigerant path
LL_AA lead wire
LL_AB lead wire
LL_AN lead wire
LL_AT lead wire
LL_BB lead wire
LL_BC lead wire
LL_BN lead wire
LL_BT lead wire
LL_CA lead wire
LL_CC lead wire
LL_CN lead wire
LL_CT lead wire
LL_P Pin
TA U-phase terminal
TB V-phase terminal
TC W-phase terminal
TNP neutral point terminal

**Claims**

1. A rotary electrical device comprising:

   a rotor freely rotatable about a rotation axis;
   a stator including a coil wire wound around in an annular state and a core of a claw pole-type provided so as to surround a periphery of the coil wire; and
   an electric wire extending from the coil wire, wherein
   the core includes a first through-hole provided centered around the rotation axis and penetrating in an axial direction and a second through-hole, in which the electric wire is arranged, penetrating in the axial direction.

2. The rotary electrical device according to claim 1, wherein

   the stator includes a first stator unit including the coil wire and the core, and a second stator unit including the coil wire and the core, and
   the first stator unit and the second stator unit are stacked in the axial direction.

3. The rotary electrical device according to claim 2, wherein the second through-hole of the first stator unit and the second through-hole of the second stator unit are connected as viewed from the axial direction.

4. The rotary electrical device according to claim 3, wherein

   the stator includes three or more stator units stacked in the axial direction, including the first stator unit and the second stator unit, and
   the second through-holes of all of the stator units are connected as viewed from the axial direction.

5. The rotary electrical device according to claim 3 or 4, further comprising:

   a pipe member having a tubular shape fit into the second through-holes of the first stator unit and the second stator unit so as to penetrate in the axial direction, wherein
   the electric wire is arranged in the pipe member.

6. The rotary electrical device according to claim 5, further comprising:

   a holding portion configured to hold the stator at one end portion in the axial direction, wherein
   one end portion of the pipe member is coupled with the holding portion.

7. The rotary electrical device according to any one of claims 2 to 6, wherein the cores of the first stator unit and the second stator unit have a same shape as each other.

8. The rotary electrical device according to claim 7, wherein

   each core includes a first yoke portion covering an inside or an outside of the coil wire in a radial direction, a second yoke portion covering both end portions of the coil wire in the axial direction, and claw magnetic poles provided at equal intervals in a circumferential direction on an outer peripheral portion or an inner peripheral portion of the second yoke portion,
   the claw magnetic poles of the second yoke portion at one end portion in the axial direction and the claw magnetic poles of the second yoke portion at another end portion in the axial direction are alternately arranged in the circumferential direction, and
   the first stator unit and the second stator unit are arranged such that the claw magnetic poles are at same positions in the circumferential direction.

9. The rotary electrical device according to claim 7, wherein

   the first stator unit and the second stator unit are arranged such that positions thereof in the circumferential direction are displaced from each other by a predetermined electric angle $\theta$ [°],
   the first stator unit has a predetermined number, which is two or more, of the second through-holes,
   the second stator unit has the predetermined number of the second through-holes,

the predetermined number of the second through-holes of the first stator unit are spaced apart in the circumferential direction by an electric angle ($\theta$+360$\times$N) [°] (N being an integer greater than or equal to 0), and
the predetermined number of the second through-holes of the second stator unit are spaced apart in the circumferential direction by an electric angle ($\theta$+360$\times$N) [°] (N being an integer greater than or equal to 0).

10. The rotary electrical device according to claim 9, wherein

the rotary electrical device is driven by an M-phase (M being an integer greater than or equal to 2) alternating current power, and
the electric angle $\theta$ = 360/M [°].

11. The rotary electrical device according to any one of claims 1 to 10, wherein

the core includes a first yoke portion covering an inside or an outside of the coil wire in a radial direction, second yoke portions covering respective end portions of the coil wire in the axial direction, and claw magnetic poles provided at equal intervals in a circumferential direction on an outer peripheral portion of the second yoke portion, the claw magnetic pole of the second yoke portion at one end portion in the axial direction and the claw magnetic pole of the second yoke portion at another end portion in the axial direction are alternately arranged in the circumferential direction,
the core includes a first core and a second core divided in the axial direction by the first yoke portion,
the first core and the second core have the second through-hole,
the second through-hole of the first core is provided at an angular position shifted by 1/4 of an interval between the claw magnetic poles adjacent to each other forming a same pole with reference to an angular position at which one of the claw magnetic poles is arranged, or at two angular positions symmetrical to each other with reference to a first angular position, and
the second through-hole of the second core is provided at an angular position shifted by 1/4 of the interval between the claw magnetic poles adjacent to each other forming a same pole with reference to the angular position at which one of the claw magnetic poles is arranged, or at two angular positions symmetrical to each other with reference to the first angular position.

12. The rotary electrical device according to any one of claims 1 to 10, wherein

the core includes a first yoke portion covering an inside or an outside of the coil wire in a radial direction, and a second yoke portion covering both end portions of the coil wire in the axial direction, and
the core is divided into a first core including the second yoke portion, which covers one end portion of the coil wire in the axial direction, and a part of the first yoke portion in the circumferential direction, and a second core including the second yoke portion, which covers another end portion of the coil wire in the axial direction, and a remaining part of the first yoke portion in the circumferential direction.

13. The rotary electrical device according to claim 12, wherein

a gap connected to the second through-hole is provided between surfaces of the first yoke portions, adjacent in the circumferential direction, of the first core and the second core, and
the electric wire is arranged in the second through-hole through the gap.

14. A fan comprising:
the rotary electrical device according to any one of claims 1 to 13.

15. A compressor comprising:
the rotary electrical device according to any one of claims 1 to 13.

16. A refrigeration apparatus comprising:
the rotary electrical device according to any one of claims 1 to 13.

17. A vehicle comprising:
the rotary electrical device according to any one of claims 1 to 13.

# FIG.1

# FIG.2

# FIG.3

EP 4 503 393 A1

# FIG.4

EP 4 503 393 A1

# FIG.5

EP 4 503 393 A1

# FIG.6

# FIG.7

EP 4 503 393 A1

# FIG.8

EP 4 503 393 A1

# FIG.9

# FIG.10

21

211A

211A1 211A2

211D

211

210

211C    211C

211B2

211B1

211B

212

211C    211C    211A

211D

211

211C

211C    211B2

211B1

211B

# FIG.11

21 { 21A 21B 21C

# FIG.12

# FIG.13

# FIG.14

EP 4 503 393 A1

# FIG.15

# FIG.16

# FIG.17

EP 4 503 393 A1

# FIG.18

# FIG.19

# FIG.20

# FIG.21

EP 4 503 393 A1

# FIG.22

# FIG.23

# FIG.24

100

# FIG.25

EP 4 503 393 A1

## INTERNATIONAL SEARCH REPORT

| International application No. |
|---|
| **PCT/JP2023/012274** |

**A. CLASSIFICATION OF SUBJECT MATTER**

*H02K 3/04*(2006.01)i; *H02K 1/14*(2006.01)i; *H02K 3/50*(2006.01)i
FI:    H02K3/04 J; H02K1/14 C; H02K3/50

According to International Patent Classification (IPC) or to both national classification and IPC

**B. FIELDS SEARCHED**

Minimum documentation searched (classification system followed by classification symbols)

H02K3/04; H02K1/14; H02K3/50

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-67089 A (MITSUBA CORP) 13 April 2015 (2015-04-13) paragraphs [0031]-[0097], fig. 1-11 | 1-5 |
| Y |  | 6-17 |
| Y | JP 2020-167792 A (DAIKIN IND LTD) 08 October 2020 (2020-10-08) paragraphs [0023], [0112], fig. 20 | 6-17 |
| A | JP 2007-49844 A (SHINANO KENSHI CO LTD) 22 February 2007 (2007-02-22) entire text, all drawings | 1-17 |
| A | JP 2021-180539 A (DAIKIN IND LTD) 18 November 2021 (2021-11-18) entire text, all drawings | 1-17 |

☐ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 May 2023** | **13 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
|  | Telephone No. |

Form PCT/ISA/210 (second sheet) (January 2015)

INTERNATIONAL SEARCH REPORT
Information on patent family members

| International application No. |
| --- |
| **PCT/JP2023/012274** |

| Patent document cited in search report | | | Publication date (day/month/year) | Patent family member(s) | | | Publication date (day/month/year) |
| --- | --- | --- | --- | --- | --- | --- | --- |
| JP | 2015-67089 | A | 13 April 2015 | DE | 112014004398 | B4 | |
| | | | | CN | 105492308 | A | |
| JP | 2020-167792 | A | 08 October 2020 | US paragraphs [0047], [0144], fig. 20 | 2022/0190652 | A1 | |
| | | | | CN | 113678342 | A | |
| JP | 2007-49844 | A | 22 February 2007 | US entire text, all drawings | 2007/0035197 | A1 | |
| | | | | CN | 1913303 | A | |
| JP | 2021-180539 | A | 18 November 2021 | CN | 115516739 | A | |

Form PCT/ISA/210 (patent family annex) (January 2015)

**EP 4 503 393 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013158072 A
- JP 2022057308 A